# EUROPEAN PATENT APPLICATION

(11) **EP 4 691 681 A1**
(43) Date of publication of application: **11.02.2026**
(21) Application number: 24780539.3
(22) Date of filing: 27.03.2024
(51) Int. Cl.: B23K 26/38, B23K 26/02, B23K 37/00, B65G 23/44

(54) **LASER PROCESSING APPARATUS**

(30) Priority: 29.03.2023 JP 2023054307
(71) Applicant: H&F Corporation, Awara-shi, Fukui 919-0695 (JP)
(72) Inventor: FUJII, Shoichiro, Awara-shi, Fukui 919-0695 (JP); OKAZAKI Akira, Awara-shi, Fukui 919-0695 (JP); KATO Yohei, Awara-shi, Fukui 919-0695 (JP); NAKAMURA Kazuyuki, Awara-shi, Fukui 919-0695 (JP)
(74) Representative: Goddar, Heinz J.
(86) International application number: PCT/JP2024/012450
(87) International publication number: WO 2024/204438

(57) **Abstract**

[Technical Problem] To provide a laser processing apparatus capable of performing laser processing on a plate material at a relatively high speed and also capable of adjusting a distance in the transport direction of the laser processing area according to the size of the scraps to be dropped.

[Solution to Problem] The present invention provides a laser processing apparatus 100, which is provided with a first conveyor 1 and a second conveyor 2 arranged in series and a laser head H arranged above laser processing area R which is a space between the first conveyor 1 and the second conveyor 2 for performing laser processing on a plate material X, and whose first conveyor 1 has a first endless belt 10, first guide rolls 11, first sagging prevention rolls 12, first support plates B1, and a first linear motion mechanism 14, and whose second conveyor 2 has a second endless belt 20, second guide rolls 21, second sagging prevention rolls 22, second support plates B2, and a second linear motion mechanism 24, and whose first linear motion mechanism 14 and the second linear motion mechanism 24 are respectively capable of driving independently, and by moving the first support plates B1 and the second support plates B2 in the same direction and at the same speed, the laser processing area follows the movement of the laser head in the transport direction, and by not moving the first support plates B1 and the second support plates B2 in the same direction and at the same speed, the distance in the transport direction of the laser processing area R becomes variable.

## Description

### [Technical Field]

The present invention relates to a laser processing apparatus capable of transporting a plate material in a designated transport direction, and at the same time, processing the said plate material into a processed material with a laser beam irradiated from a laser head and transporting the said processed material in the transport direction.

### [Background Art]

In press working, blanking materials are generally used as raw materials, which are made by sequentially unwinding a long plate material wound into a coil and cutting it to a fixed size.

Some methods have been developed for cutting such plate materials by a laser blanking apparatus that utilizes laser beam. With a laser blanking apparatus, because it utilizes laser beam, the movement can be controlled by a program, which makes it possible to precisely cut a plate material into a desired shape, and it also has an advantage of less burr formation.

As one of such laser blanking apparatuses, for example, a laser blanking apparatus is known which is capable of transporting a flat plate material, and at the same time, cutting it into a blank material utilizing laser beam irradiated from a laser nozzle (laser head), and is provided with a laser nozzle, an endless conveyor for transporting a plate material, a pair of upstream side support rollers and downstream side support rollers installed below the laser nozzle, and pull-in rollers installed below the upstream side support rollers and downstream side support rollers, and the upstream side support rollers, the downstream side support rollers, and the pull-in rollers guide the endless conveyor, and their respective positions can be changed independently (see, for example, Patent Literature 1).

Also, another laser blanking apparatus is known which is provided with: a first endless belt on the front side and a second endless belt on the rear side; first front upper inner guide rollers, first front lower inner guide rollers, first rear upper inner guide rollers, first rear middle inner guide rollers, first rear lower inner guide rollers, a first guide part, second front upper inner guide rollers, second front middle inner guide rollers, second front lower inner guide rollers, second rear upper inner guide rollers, second rear lower inner guide rollers, and a second guide part which are for guiding these; a laser nozzle (laser head) arranged above a space part between the first endless belt and the second endless belt; and whose shift part formed by an integration of the first rear upper inner guide rollers, the first rear middle inner guide rollers, the second front upper inner guide rollers, and the second front middle inner guide rollers follows and slides with the movement of laser nozzle in the front-rear direction so as to be positioned directly below the laser nozzle; and whose driven shift part formed by an integration of the first rear lower inner guide rollers and the second front lower inner guide rollers is capable of sliding along a Y-axis driven shift rail extending in the front-rear direction equipped on both sides of the first endless belt and the second endless belt; and also follows the sliding of the shift part and moves in the opposite direction to the movement of the shift part (see, for example, Patent Literature 2).

### [Citation List]

### [Patent Literatures]

[Patent Literature 1] Patent application publication no. 5916170
[Patent Literature 2] Patent application publication no. 6792728

### [Summary of Invention]

### [Technical Problem]

Incidentally, because the laser blanking apparatuses described in the above Patent Literature 1 and the above Patent Literature 2 are intended to cut a plate material in a straight line to produce a blank material, the space below the laser head (hereinafter also referred to as the "laser processing area") is designed to be relatively narrow.

For this reason, when using a laser blanking apparatus to perform processing such as forming piercing holes for positioning or hollowing out, it may not be possible to drop a scrap of a designated shape separated from the plate material from the laser processing area.

On the other hand, if the distance in the transport direction of the laser processing area is made sufficiently large, there is a disadvantage that some plate materials may bend and the accuracy of the laser processing is reduced.

The present invention has been made in consideration of the above circumstances, and with the purpose of providing a laser processing apparatus that is capable of performing laser processing on a plate material at a relatively high speed and adjusting the distance in the transport direction of the laser processing area according to the size of the scraps to be dropped.

### [Solution to Problem]

The present inventors conducted intensive studies to solve the above problems and discovered that the above problems could be solved by providing a first conveyor, a second conveyor and a laser head, and making the laser processing area follow the movement of the laser head in the transport direction, and at the same time, making the distance of the laser processing area in the transport direction variable, thereby completing the present invention.

The present invention relates to a laser processing apparatus capable of transporting a plate material in a designated transport direction, and at the same time, processing the said plate material into a processed material with a laser beam irradiated from a laser head and transporting the said processed material in the transport direction; which is provided with: first conveyors and second conveyors arranged in direct series; a laser head that is arranged above a laser processing area which is a space between the first conveyors and the second conveyors for performing laser processing on a plate material; and whose first conveyors include at least: a first endless belt for transporting a plate material; first guide rolls with their first front guide rolls located on the upstream side and first rear guide rolls located on the downstream side that are in contact with an inner surface of the said first endless belt for guiding the said first endless belt; first sagging prevention rolls for preventing sagging in the first endless belt; first support plates on which the first rear guide rolls and the first sagging prevention rolls are supported; and a first linear motion mechanism for reciprocating the said first support plates in the transport direction; and whose second conveyors include at least: a second endless belt for transporting a processed material; second guide rolls with their second front guide rolls located on the upstream side and second rear guide rolls located on the downstream side that are in contact with an inner surface of the said second endless belt for guiding the said second endless belt; second sagging prevention rolls for preventing sagging in the second endless belt, second support plates on which the second front guide rolls and the second sagging prevention rolls are supported; and a second linear motion mechanism for reciprocating the said second support plates in the transport direction; and whose first front guide rolls and the second rear guide rolls are fixed to an outer frame; and whose first linear motion mechanism and the second linear motion mechanism are respectively capable of being driven independently; and by moving the first support plates and the second support plates in the same direction at the same speed, the distance in the transport direction of the laser processing area becomes constant and follows the movement of the laser head in the transport direction; and by not moving the first support plates and the second support plates in the same direction at the same speed, the distance in the transport direction of the laser processing area becomes variable.

In the laser processing apparatus of the present invention, it is preferable that a first linear motion mechanism consists of a first base to which first support plates are attached, a first timing belt to which the said first base is attached, and a first motor for reciprocating the said first timing belt in the transport direction, and that, a second linear motion mechanism consists of a second base to which second support plates are attached, a second timing belt to which the said second base is attached, and a second motor for reciprocating the said second timing belt in the transport direction.

In this case, in the laser processing apparatus, it is preferable that the apparatus is further provided with a linear motion guide for guiding the first support plates and the second support plates, the first base attached to the lower front side of the first support plates and the second base attached to the lower rear side of the second support plates, and that the linear motion guide consists of blocks attached to the lower rear side of the first support plates and the lower front side of the second support plates respectively, and a rail section for guiding both of the said blocks.

In the laser processing apparatus of the present invention, it is preferable that the apparatus is further provided with a first cover part that covers the first endless belt guided downward from the first rear guide rolls, and a second cover part that covers the second endless belt guided from below to the second front guide rolls.

In the laser processing apparatus of the present invention, it is preferable that the apparatus is further provided with an X-axis rail for reciprocating the laser head in the width direction, a Y-axis rail for reciprocating the X-axis rail in the transport direction, and a collection box arranged below the laser processing area.

In the laser processing apparatus of the present invention, it is preferable that the first conveyors further include a first tension adjustment roll for adjusting the tension of the first endless belt and a first meandering adjustment roll for preventing meandering of the first endless belt, and the second conveyors further include a second tension adjustment roll for adjusting the tension of the second endless belt and a second meandering adjustment roll for preventing meandering of the second endless belt.

In the laser processing apparatus of the present invention, it is preferable that the first guide rolls are in contact with the inner surface of the first endless belt, and that the devise further includes first front lower guide rolls arranged below the first front guide rolls and first rear lower guide rolls arranged below the first rear guide rolls, that the first front lower guide rolls and the first rear lower guide rolls are fixed to an outer frame, that first sagging prevention rolls are in contact with the outer surface of the first endless belt between the first rear guide rolls and the first rear lower guide rolls, that second guide rolls are in contact with the inner surface of the second endless belt, and that the apparatus further includes second front lower guide rolls arranged below the second front guide rolls and second rear lower guide rolls arranged below the second rear guide rolls, that the second front lower guide rolls and the second rear lower guide rolls are fixed to the outer frame, and that second sagging prevention rolls are in contact with the outer surface of the second endless belt between the second front guide rolls and the second front lower guide rolls.

In this case, in the laser processing apparatus, it is preferable that the first rear guide rolls, the second front guide rolls, the first sagging prevention rolls and the second sagging prevention rolls are all arranged in pairs in the top-bottom direction.

### [Advantageous Effects of Invention]

In the laser processing apparatus of the present invention, because the apparatus is provided with the first conveyors, the second conveyors, and the laser head, the laser processing is performed on a transported plate material, and a processed material that has been cut into a desired shape is transported further downstream side.

This makes it possible to perform continuous laser processing on a plate material.

In the laser processing apparatus of the present invention, because laser processing is performed in a laser processing area, which is the space between the first conveyors and second conveyors, it is possible to prevent the first conveyors and second conveyors from being damaged by the laser beam irradiated from a laser head.

Also, by moving first support plates and second support plates, for example, in the same direction and at the same speed (hereinafter referred to as "steady motion") and making the laser processing area follow the movement of the laser head in the transport direction, it is possible to prevent damages to the first conveyors and the second conveyors and also, because the range of motion of the laser head is increased, it becomes possible to improve the transport speed of a plate material.

As a result, with the laser processing apparatus, it is possible to perform laser processing at a relatively high speed.

In the laser processing apparatus of the present invention, for example, by not moving the first support plates and the second support plates in the same direction and at the same speed (hereinafter referred to as "unsteady motion"), the distance of the transport direction of the laser processing area can be made variable.

This makes it possible to drop scraps from the laser processing area during laser processing by adjusting the distance in the transport direction of the laser processing area according to the size of the scraps.

Also, when laser processing is performed while moving the laser head in the transport direction, spatters generated by the processing may flow in the opposite direction to the transport direction and concentrate on and adhere to the first conveyors, making cleaning difficult, however, by increasing the distance in the transport direction of the laser processing area, the scattering spatters may cool and solidify before adhering to the first conveyors and fall, thereby preventing adhesion to the first conveyors.

In addition, by widening the distance of the laser processing area in the transport direction, maintenance is also made easier.

In the laser processing apparatus of the present invention, by utilizing the first timing belt as the first linear motion mechanism, it is possible to reciprocate the first support plates with sufficient accuracy while having a simple configuration.

Similarly, by utilizing the second timing belt as the second linear motion mechanism, it is possible to reciprocate the second support plates with sufficient accuracy while having a simple configuration.

Also, maintenance of the first linear motion mechanism and the second linear motion mechanism can be made easier.

In addition to this, in the laser processing apparatus, by further providing with a linear motion guide, the reciprocating movement of the first support plates by the first linear motion mechanism and the reciprocating movement of the second support plates by the second linear motion mechanism can be made smoother.

Also, because both blocks are guided by the same rail section, the first support plates and the second support plates can be reciprocated on the same line, and the apparatus itself can be made compact.

In the laser processing apparatus of the present invention, by further providing with a first cover part that covers the first endless belt and a second cover part that covers the second endless belt, it is possible to prevent scattering spatters during laser processing from adhering to the endless belts. By the way, the spatters that adhere to the endless belts may damage a plate material or a processed material.

In the laser processing apparatus of the present invention, by providing with an X-axis rail and a Y-axis rail for reciprocating the laser head, it is possible to move the laser head in any direction while having a compact configuration.

Also, in the laser processing apparatus, by providing a collection box, spatters and scraps generated during laser processing can be collected.

In the laser processing apparatus of the present invention, when the first conveyors further include a first tension adjustment roll and a first meandering adjustment roll, the transportation of a plate material becomes highly accurate and stable.

Similarly, when the second conveyors further include a second tension adjustment roll and a second meandering adjustment roll, the transportation of a processed material becomes highly accurate and stable.

In the laser processing apparatus of the present invention, by making the first sagging prevention rolls supported by the first support plates in contact with the outer surface of the first endless belt between the first rear guide rolls and the first rear lower guide rolls, and by making the second sagging prevention rolls supported by the second support plates in contact with the outer surface of the second endless belt between the second front guide rolls and the second front lower guide rolls, a sufficient space can be secured between the first sagging prevention rolls and the second sagging prevention rolls.

In this case, by arranging all the first rear guide rolls, the second front guide rolls, the first sagging prevention rolls, and the second sagging prevention rolls in pairs in the top-bottom direction, it is possible to secure a sufficient space in the top-bottom direction.

As a result, the scattering spatters can be sufficiently cooled and solidified.

In this way, by securing a sufficient space, it is possible to prevent flying spatters from adhering to the first endless belt and the second endless belt, and to prevent falling scraps from colliding with them.

Also, when a collection box is placed below the laser processing area, it can be a sufficiently large collection box.

### [Brief Description of Drawings]

[FIG. 1] FIG. 1 is a perspective view showing a 1st Embodiment of the laser processing apparatus according to the present invention.
[FIG. 2] FIG. 2 is a rough side view for describing a transport section of the laser processing apparatus shown in FIG. 1.
[FIG. 3] FIG. 3 is a cross-sectional view of the laser processing apparatus shown in FIG. 2 as viewed from the line A-A.
[FIG. 4] FIG. 4 is a perspective view for describing a state of steady motion of the first support plates and the second support plates of the laser processing apparatus shown in FIG. 1.
[FIG. 5] FIG. 5 is a schematic side view for describing a state of the unsteady motion of the first support plates and the second support plates of the laser processing apparatus shown in FIG. 1.
[FIG. 6] FIG. 6 is a perspective view showing a 2nd Embodiment of the transport section of the laser processing apparatus according to the present invention.
[FIG. 7] FIG. 7 is a rough side view for describing the transport section of the laser processing apparatus shown in FIG. 6.
[FIG. 8] FIG. 8 is a perspective view for describing a state of the steady motion of the first support plates and the second support plates of the laser processing apparatus shown in FIG. 6.
[FIG. 9] FIG. 9 is a schematic side view for describing a state of the unsteady motion of the first support plates and the second support plates of the laser processing apparatus shown in FIG. 6.
[FIG. 10] FIG. 10 is a perspective view showing a 3rd Embodiment of the transport section of the laser processing apparatus according to the present invention.
[FIG. 11] FIG. 11 is a rough side view for describing the transport section of the laser processing apparatus shown in FIG. 10.
[FIG. 12] FIG. 12 is a schematic side view for describing a state of the unsteady motion of the first support plates and the second support plates of the laser processing apparatus shown in FIG. 10.

### [Description of Embodiments]

Hereinafter, preferred embodiments of the present invention will be described in detail with reference to the drawings as necessary. By the way, in the drawings, the same elements are given the same reference signs and duplicated explanations are omitted. Also, unless otherwise specified, positional relationships such as top, bottom, left and right are based on the positional relationships shown in the drawings. In addition, the dimensional ratios in the drawings are not limited to those shown in the drawings.

In this DESCRIPTION, the term "transport direction" simply means the direction in which a plate material or a processed material is transported. By the way, the transport direction of a plate material and the transport direction of a processed material are consistent.

And, "reciprocating movement in the transport direction" refers to movements including outward movement to the downstream side, which is the positive direction in transport, and return movement to the upstream side, which is the negative direction in transport.

Also, "front" refers to the upstream side in the transport direction, and "rear" refers to the downstream side in the transport direction of a plate material.

In addition, the "steady motion" means moving the first support plates and the second support plates in the same direction at the same speed, and the "unsteady motion" means not moving the first support plates and the second supports plates in the same direction at the same speed, and includes cases such as, moving the first support plates and the second support plates in opposite directions, moving the first support plates and the second support plates at different speeds, or moving only one of these plates.

Furthermore, when simply referring to "both sides" means both sides in the width direction (left and right direction) perpendicular to the transport direction of a plate material.

The laser processing apparatus according to the present invention is an apparatus for performing laser processing on a plate material to form a processed material into a desired shape.

By the way, such laser processing is a process for cutting a plate material. That is, this includes not only cutting processes that produce scrap, such as forming piercing holes for positioning and hollowing out, and cutting processes that simply cut a plate material in a straight line to produce a blank material, but also processes that form patterns on the surface of a plate material with a laser.

In this case, the overall shape of a plate material is not particularly limited, but generally, a plate material is in the form of a long plate material wound into a coil.

The material of a plate material is not particularly limited as long as it can be cut by laser beam, and examples include metals such as iron, aluminum and titanium, alloys such as steel (including high tensile strength steel and ultra-high tensile strength steel), resins such as acrylic, wood, and composite materials of these.

Also, when a plate material is a metal or an alloy, a plate material with 0.1 to 20 mm thickness is preferably used from the viewpoint of preventing deflection and reliably cutting with laser beam, and 0.1 to 5 mm is used more preferably from the viewpoint of versatility.

In addition, the method for collecting the processed material after it has been laser cut and transported is not particularly limited.

### (1st Embodiment)

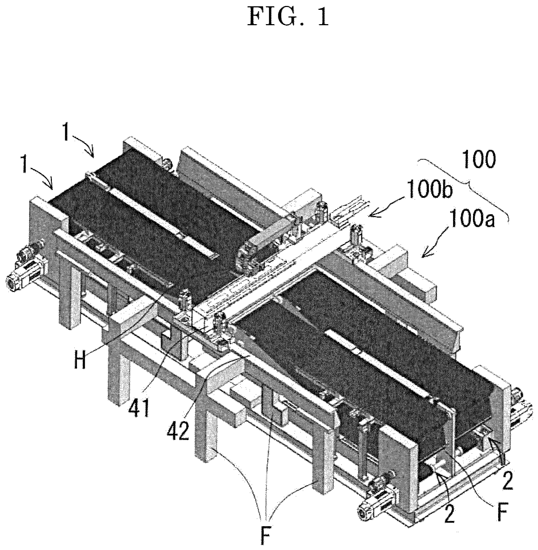

FIG 1 is a perspective view showing a 1st Embodiment of the laser processing apparatus according to the present invention. By the way, in FIG. 1, the description of the plate material and the processed material are omitted.

As shown in FIG. 1, the laser processing apparatus 100 according to the 1st Embodiment includes a transport section 100a for transporting a plate material or a processed material, and a laser section 100b mounted above the transport section 100a so as to straddle the transport section 100a.

Therefore, in the laser processing apparatus 100 according to the 1st Embodiment, a plate material is transported by the transport section 100a, the laser section 100b irradiates the laser beam (laser processing), and the processed material is transported by the transport section 100a.

The laser processing apparatus 100 performs laser processing continuously on the plate material X, and therefore has high cutting efficiency and excellent productivity.

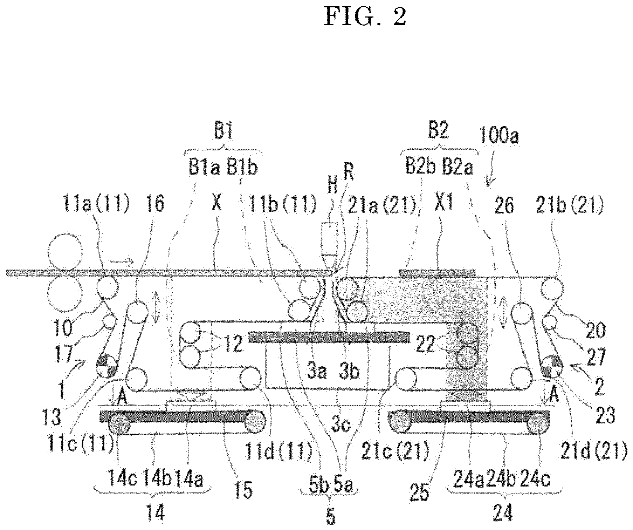

FIG. 2 is a rough side view for describing a transport section of the laser processing apparatus shown in FIG. 1. By the way, in FIG. 2, the description of the laser section other than the laser head is omitted.

As shown in FIG. 2, in the laser processing apparatus 100 according to the 1st Embodiment, the transport section 100a is provided with first conveyors 1 and second conveyors 2 arranged in series, a laser head H arranged above a laser processing area R which is a space between the first conveyors 1 and the second conveyors 2, a linear motion guide 5 for guiding the first support plates B1 and the second support plates B2, and a first cover part 3a, a second cover part 3b, and a collection box 3c arranged below the laser processing area R.

In the transport section 100a, the plate material X is transported on the upper surface of the first conveyors 1, and the processed material X1 which is the laser processed plate material X, is transported on the upper surface of the second conveyors 2.

Also, in the transport section 100a, laser processing is performed in the laser processing area R by the laser head H.

At this time, in the laser processing apparatus 100, as will be described later, it is possible to make the laser processing area R follow the movement of the laser head H in the transport direction during laser processing.

Also, by widening the distance of the laser processing area R in the transport direction in accordance with the size of scraps generated, it is possible to drop scraps into a collection box 3c.

In the transport section 100a, two first conveyors 1 are arranged in parallel in the width direction (see FIG. 1).

This makes it possible to perform laser processing by operating only one of the first conveyors 1 when the width direction size of the plate material X is small, and also makes it possible to perform laser processing on different plate materials X using the left and right first conveyors 1.

Also, when the width of the plate material X is large, it is preferable to use the left and right first conveyors 1 in synchronization.

Here, since the left and right first conveyors 1 have the same configuration, one of the first conveyors 1 is used to describe its configuration.

The first conveyor 1 has at least a first endless belt 10, first guide rolls 11 for guiding the first endless belt 10, first sagging prevention rolls 12 for preventing sagging in the first endless belt 10, a first drive roll 13 for driving the first endless belt 10, a first tension adjustment roll 16 for adjusting the tension of the first endless belt 10, a first meandering adjustment roll 17 for preventing meandering of the first endless belt 10, first support plates B1 on which designated rolls are supported, and a first linear motion mechanism 14 for reciprocating the said first support plates B1 in the transport direction.

The first endless belt 10 is a belt with a circular shape in a side view for transporting a plate material X, whose material is not particularly limited, and any known material can be appropriately adopted.

Also, in the first endless belt 10, it is preferable to have a groove (not shown in the FIG.) on the side that comes into contact with the plate material X (outer surface).

The first guide rolls 11 are rolls for guiding the first endless belt 10.

The first guide rolls 11 have first front guide rolls 11a that are in contact with the inner surface of the first endless belt 10 and arranged on the upstream side, first rear guide rolls 11b that are in contact with the inner surface of the first endless belt 10 and arranged on the downstream side, first front lower guide rolls 11c that are in contact with the inner surface of the first endless belt 10 and arranged below the first front guide rolls 11a, and first rear lower guide rolls 11d that are in contact with the inner surface of the first endless belt 10 and arranged below the first rear guide rolls 11b.

Therefore, with the first conveyors 1, the first endless belt 10 is guided in the order of the first front guide rolls 11a, the first rear guide rolls 11b, the first rear lower guide rolls 11d, and the first front lower guide rolls 11c.

In the first guide rolls 11, the first rear guide rolls 11b are arranged in a pair in the top-bottom direction. That is, the first rear guide rolls 11b are arranged in a top-bottom direction so that two rolls are consecutively arranged.

At this time, it is preferable that, for the first rear guide roll 11b arranged on the upper side, the first rear guide roll 11b arranged on the lower side is arranged forward of a point directly below the upper side first rear guide roll 11b. In this case, the first endless belt 10 guided by these rolls moves forward just like escaping, flying spatters can be prevented from adhering to the first endless belt 10.

In the first guide rolls 11, the first front guide rolls 11a, the first rear lower guide rolls 11d, and the first front lower guide rolls 11c are all in a rotatable state, and their both ends are supported by outer frame F located on both sides of the first endless belt 10 (see FIG. 1).

By the way, the outer frame F is located on the outside of each of the conveyors arranged in parallel and between the conveyors arranged in parallel.

On the other hand, the pair of first rear guide rolls 11b are in a rotatable state, and their both ends are supported by the first support plates B1 to be described later.

The first sagging prevention rolls 12 are rolls for preventing sagging in the first endless belt 10 by moving together with the first rear guide rolls 11b.

The first sagging prevention rolls 12 are in contact with the outer surface of the first endless belt 10 between pairs of the first rear guide rolls 11b and the first rear lower guide rolls 11d, and are arranged forward of the first rear guide rolls 11b and the first rear lower guide rolls 11d (inside the first endless belt 10).

Therefore, the first endless belt 10 is guided to the first sagging prevention rolls 12 between the pairs of the first rear guide rolls 11b and the first rear lower guide rolls 11d.

The first sagging prevention rolls 12 are arranged in a pair in the top-bottom direction. That is, the first sagging prevention rolls 12 are arranged in a top-bottom direction so that two rolls are consecutively arranged. Also, the first sagging prevention roll 12 arranged on the lower side is arranged directly below the first sagging prevention roll 12 of the upper side.

The pair of first sagging prevention rolls 12 are in a rotatable state, and their both ends are supported by the first support plates B1 to be described later.

The first drive roll 13 is a roll for driving the first endless belt 10. By the way, for such driving method, any known methods such as a method using a motor can be appropriately adopted.

The first drive roll 13 is arranged in contact with the inner surface of the first endless belt 10 between the first front lower guide rolls 11c and the first front guide rolls 11a.

Also, the first drive roll 13 is in a rotatable state, and its both ends are supported by outer frame F located on both sides of the first endless belt 10 (see FIG. 1).

The first tension adjustment roll 16 is a roll for further adjusting the tension of the first endless belt 10 whose sagging is prevented by the first sagging prevention rolls 12. The first tension adjustment roll 16 is capable of top-bottom movement, and the tension of the first endless belt 10 is adjusted by such movement.

The first tension adjustment roll 16 is arranged in contact with the outer surface of the first endless belt 10 between the first front lower guide rolls 11c and the first drive roll 13.

Also, the first tension adjustment roll 16 is in a rotatable state, and its both ends are attached to and supported by the outer frame F located on both sides of the first endless belt 10, so that it can move from top to bottom.

The first meandering adjustment roll 17 is a roll for preventing meandering of the first endless belt 10. The first meandering adjustment roll 17 is capable of tilting its axial direction, so that if the first endless belt 10 meanders, the relevant meandering can be eliminated by tilting the axial direction of the first meandering adjustment roll 17.

The first meandering adjustment roll 17 is arranged in contact with the outer surface of the first endless belt 10 between the first drive roll 13 and the first front guide rolls 11a.

The first meandering adjustment roll 17 is in a rotatable state, and its both ends are attached to and supported by the outer frame F located on both sides of the first endless belt 10, so that it can be changed in the axial direction.

Therefore, the first endless belt 10 is guided between the first front lower guide rolls 11c and the first front guide rolls 11a in the order of the first tension adjustment roll 16, the first drive roll 13, and the first meandering adjustment roll 17.

In this way, the first tension adjustment roll 16, the first drive roll 13 and the first meandering adjustment roll 17 are arranged between the first front lower guide rolls 11c and the first front guide rolls 11a located at the front, which provide advantages of easier maintenance and not interfering with the movement of the pair of first rear guide rolls 11b and the pair of first sagging prevention rolls 12 that move together with the first support plates B1.

The first support plates B1 are provided on both sides of the first conveyors 1. Here, since these first support plates B1 have a symmetrical structure to each other, one of the first support plates B1 is used to describe its configuration.

The first support plate B1 has an inverted L-shape in side view and consists of a plate-shaped first top-bottom plate part B1a extending in the top-bottom direction and a plate-shaped first front-rear plate part B1b extending backward from above the first top-bottom plate part B1a.

And the first front-rear plate part B1b supports a pair of first rear guide rolls 11b on its rear side in a rotatable state, and the first top-bottom plate part B1a supports the first sagging prevention rolls 12 in a rotatable state.

In the first support plates B1 on both sides, to the lower front side, that is, to the lower part of the first top-bottom plate part B1a, the first linear motion mechanism 14 is attached.

The first support plates B1 are capable of reciprocating movement in the transport direction by the relevant first linear motion mechanism 14. That is, in the laser processing apparatus 100, the first linear motion mechanism 14 enables a pair of the first rear guide rolls 11b and a pair of first sagging prevention rolls 12 supported by the first support plates B1 to reciprocate together in the transport direction.

In the first support plates B1, for example, when the first rear guide rolls 11b are moved backward, the tension of the first endless belt 10 increases, however, since the first sagging prevention rolls 12 are also moved backward at the same time, forcefully pulling the first endless belt 10 can be prevented.

Conversely, when the first rear guide rolls 11b are moved forward, the tension of the first endless belt 10 decreases, however, since the first sagging prevention rolls 12 are also moved forward at the same time, sagging of the first endless belt 10 can be prevented.

That is, because of the first sagging prevention rolls 12, even when the first support plates B1 move, a constant length of the first endless belt 10 can be maintained.

The first linear motion mechanism 14 is placed to reciprocate the first support plates B1 in the transport direction.

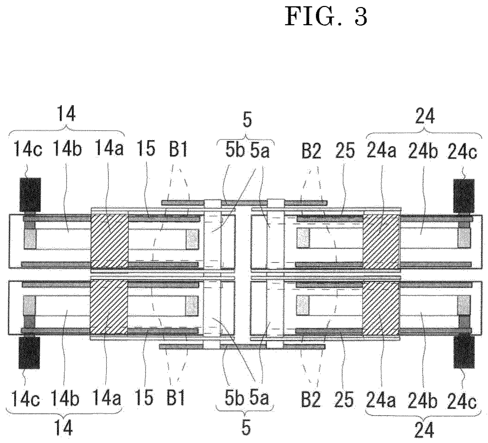

FIG. 3 is a cross-sectional view of the laser processing apparatus shown in FIG. 2 as viewed from the line A-A. By the way, in FIG. 3, for the sake of convenience, the position of the first support plates B1 is indicated by dashed lines.

As shown in FIG. 3, the first linear motion mechanism 14 consists of s a first base 14a attached to the lower front side of the first support plates B1, a first timing belt 14b to which the said first base 14a is attached and fixed, and a first motor 14c for driving the said first timing belt 14b.

In the first linear motion mechanism 14, the first motor 14c drives the first timing belt 14b, thereby making it possible to reciprocate the first base 14a in the transport direction. That is, the first linear motion mechanism 14 is capable of reciprocating the first support plates B1 attached to that first base 14a in the transport direction.

In this way, the first linear motion mechanism 14 is capable of reciprocating the first support plates B1 with sufficient accuracy, while having a simple configuration.

Also, the first linear motion mechanism 14 further has a pair of auxiliary rails 15 extending in the transport direction on both sides of the first timing belt 14b.

And to the pair of auxiliary rails 15, a first base 14a is attached. That is, the first base 14a is attached and fixed to the first timing belt 14b, and at the same time, is attached to the auxiliary rails 15 on both sides.

This makes it possible for the first base 14a to reciprocate by the first timing belt 14b and is guided along the auxiliary rails 15.

As a result, in the first conveyors 1, rattles during reciprocation of the first support plates B1 can be prevented, and the first support plates B1 can be smoothly reciprocated.

Returning to FIG. 2, in the laser processing apparatus 100, two second conveyors 2 are arranged side by side in the width direction, similar to the first conveyors 1 (see FIG. 2).

This makes it possible to transport the processed material X1 using only one of the second conveyors 2 when the size of the width direction of the processed material X1 is small, and also makes it possible to transport different processed materials X1 using the left and right second conveyors 2.

Also, when the width of the processed material X1 is large, it is preferable to use the left and right second conveyors 2 in synchronization.

Here, since the left and right second conveyors 2 have the same configuration, one of the second conveyors 2 is used to describe its configuration.

The second conveyor 2 has at least a second endless belt 20, second guide rolls 21 for guiding the second endless belt 20, second sagging prevention rolls 22 for preventing sagging in the second endless belt 20, a second drive roll 23 for driving the second endless belt 20, a second tension adjustment roll 26 for adjusting the tension of the second endless belt 20, a second meandering adjustment roll 27 for preventing meandering of the second endless belt 20, second support plates B2 on which designated rolls are supported, and a second linear motion mechanism 24 for reciprocating the said second support plates B2 in the transport direction.

The second endless belt 20, like the first endless belt 10, is a belt with a circular shape in a side view for transporting the processed material X1, whose material is not particularly limited, and any known material can be appropriately adopted.

Also, for the second endless belt 20, similar to the first endless belt 10, it is preferable to have a groove (not shown in the FIG.) on the side that comes into contact with the processed material X1 (outer surface).

The second guide rolls 21 are rolls for guiding the second endless belt 20.

The second guide rolls 21 have second front guide rolls 21a that are in contact with the inner surface of the second endless belt 20 and arranged on the upstream side, second rear guide rolls 21b that are in contact with the inner surface of the second endless belt 20 and arranged on the downstream side, second front lower guide rolls 21c that are in contact with the inner surface of the second endless belt 20 and arranged below the second front guide rolls 21a, and second rear lower guide rolls 21d that are in contact with the inner surface of the second endless belt 20 and arranged below the second rear guide rolls 21b.

Therefore, with the second conveyors 2, the second endless belt 20 is guided in the order of the second front guide rolls 21a, the second rear guide rolls 21b, the second rear lower guide rolls 21d, and the second front lower guide rolls 21c.

In the second guide rolls 21, the second front guide rolls 21a are arranged in a pair in the top-bottom direction. That is, the second front guide rolls 21a are arranged in a top-bottom direction so that two rolls are consecutively arranged, similar to the first rear guide rolls 11b mentioned above.

At this time, it is preferable that, for the second front guide roll 21a arranged on the upper side, the second front guide roll 21a arranged on the lower side is arranged backward of a point directly below the upper side of the second front guide roll 21a. In this case, the second endless belt 20 guided by these rolls moves backward just like escaping, flying spatters can be prevented from adhering to the second endless belt 20.

In the second guide rolls 21, the second rear guide rolls 21b, the second rear lower guide rolls 21d, and the second front lower guide rolls 21c are all in a rotatable state, and their both ends are supported by outer frame F located on both sides of the first endless belt 20 (see FIG. 1).

On the other hand, the pair of the second front guide rolls 21a are in a rotatable state and their both ends are supported by the second support plates B2 to be described later.

The second sagging prevention rolls 22 are rolls for preventing sagging in the second endless belt 20 by moving together with the second front guide rolls 21a.

The second sagging prevention rolls 22 are in contact with the outer surface of the second endless belt 20 between a pair of the second front guide rolls 21a and the second front lower guide rolls 21c, and are arranged backward of the second front guide rolls 21a and the second front lower guide rolls 21c (inside the second endless belt 20).

Therefore, the second endless belt 20 is guided to the second sagging prevention rolls 22 between the pair of the second front guide rolls 21a and the second front lower guide rolls 21c.

The second sagging prevention rolls 22 are arranged in a pair in the top-bottom direction. That is, the second sagging prevention rolls 22 are arranged in a top-bottom direction so that two rolls are consecutively arranged, similar to the first sagging prevention rolls 12 mentioned above. Also, the second sagging prevention roll 22 arranged on the lower side is arranged directly below the second sagging prevention roll 22 on the upper side.

The pair of second sagging prevention rolls 22 are in a rotatable state, and their both ends are supported by second support plates B1 to be described later.

As mentioned above, in the laser processing apparatus 100, the first rear guide rolls 11b, the second front guide rolls 21a, the first sagging prevention rolls 12, and the second sagging prevention rolls 22 are all arranged in pairs in the top-bottom direction. This makes it possible to secure a sufficient space in the top-bottom direction below the laser processing area R, the generated spatters may cool, solidify, and fall, thereby preventing adhesion to the first endless belt 10 and the second endless belt 20.

Also, it is possible to prevent the falling scraps from colliding with the first endless belt 10 or the second endless belt 20.

Also, when a collection box 33 is placed below the laser processing area R, it can be a sufficiently large collection box 33.

The second drive roll 23 is a roll for driving the second endless belt 20. By the way, for such driving method, any known methods such as a method using a motor can be appropriately adopted.

The second drive roll 23 is arranged in contact with the inner surface of the second endless belt 20 between the second rear lower guide rolls 21d and the second rear guide rolls 21b.

Also, the second drive roll 23 is in a rotatable state, and its both ends are supported by outer frame F located on both sides of the second endless belt 20 (see FIG. 1).

The second tension adjustment roll 26 is a roll for further adjusting the tension of the second endless belt 20 whose sagging is prevented by the second sagging prevention rolls 22. The second tension adjustment roll 26 is capable of top-bottom movement, and the tension of the second endless belt 20 is adjusted by such movement.

The second tension adjustment roll 26 is arranged in contact with the outer surface of the second endless belt 20 between the second rear lower guide rolls 21d and the second drive roll 23.

Also, the second tension adjustment roll 26 is in a rotatable state, and its both ends are attached to and supported by the outer frame F located on both sides of the second endless belt 20, so that it can move from top to bottom.

The second meandering adjustment roll 27 is a roll for preventing meandering of the second endless belt 20. The second meandering adjustment roll 27 is capable of tilting its axial direction, so that if the second endless belt 20 meanders, the relevant meandering can be eliminated by tilting the axial direction of the second meandering adjustment roll 27.

The second meandering adjustment roll 27 is arranged in contact with the outer surface of the second endless belt 20 between the second drive roll 23 and the second rear guide rolls 21b.

Also, the second meandering adjustment roll 27 is in a rotatable state, and its both ends are attached to and supported by the outer frame F located on both sides of the second endless belt 20, so that it can be changed in the axial direction.

Therefore, the second endless belt 20 is guided between the second rear lower guide rolls 21d and the second rear guide rolls 21b in the order of the second tension adjustment roll 26, the second drive roll 23, and the second meandering adjustment roll 27.

In this way, the second tension adjustment roll 26, the second drive roll 23 and the second meandering adjustment roll 27 are arranged between the second rear lower guide rolls 21d and the second rear guide rolls 21b located at the rear, which provide advantages of easier maintenance and not interfering with the movement of the pair of second front guide rolls 21a and the pair of second sagging prevention rolls 22 that move together with the second support plates B2.

The second support plates B2 are provided on both sides of the second conveyors 2. Here, since these second support plates B2 have a symmetrical structure to each other, one of the second support plate B2 is used to describe its configuration.

The second support plate B2 has an inverted L-shape in side view and consists of a plate-shaped second top-bottom plate part B2a extending in the top-bottom direction and a plate-shaped second front-rear plate part B2b extending forward from above the second top-bottom plate part B2a.

And as mentioned above, the second front-rear plate part B2b supports a pair of second front guide rolls 21a on its front side in a rotatable state, and the second top-bottom plate part B2a supports the second sagging prevention roll 22 in a rotatable state.

In the second support plates B2 on both sides, to the lower rear side, that is, to the lower part of the second top-bottom plate part B2a, the second linear motion mechanism 24 is attached.

The second support plates B2 are capable of reciprocating movement in the transport direction by the relevant second linear motion mechanism 24. That is, in the laser processing apparatus 100, the second linear motion mechanism 24 enables a pair of the second front guide rolls 21a and a pair of the second sagging prevention rolls 22 supported by the second support plates B2 to reciprocate together in the transport direction.

In the second support plates B2, for example, when the second front guide rolls 21a are moved backward, the tension of the second endless belt 20 decreases, however, since the second sagging prevention rolls 22 are also moved backward at the same time, sagging of the second endless belt 20 can be prevented.

Conversely, when the second front guide rolls 21a are moved forward, the tension of the second endless belt 20 increases, however, since the second sagging prevention rolls 22 are also moved forward at the same time, forcefully pulling the second endless belt 20 can be prevented.

That is, because of the second sagging prevention rolls 22, even when the second support plates B2 move, a constant length of the second endless belt 20 can be maintained.

The second linear motion mechanism 24 is placed to reciprocate the second support plates B2 in the transport direction.

The second linear motion mechanism 24 consists of a second base 24a attached to the lower rear side of the second support plates B2, a second timing belt 24b to which the said second base 24a is attached and fixed, and a second motor 24c for driving the said second timing belt 24b.

In the second linear motion mechanism 24, the second motor 24c drives the second timing belt 24b, thereby making it possible to reciprocate the second base 24a in the transport direction. That is, the second linear motion mechanism 24 is capable of reciprocating the second support plates B2 attached to that second base 24a in the transport direction.

In this way, the second linear motion mechanism 24 is capable of reciprocating the second support plates B2 with sufficient accuracy, while having a simple configuration.

Also, the second linear motion mechanism 24 further has a pair of auxiliary rails 25 extending in the transport direction on both sides of the second timing belt 24b. And to the pair of auxiliary rails 25, a second base 24a is attached. That is, the second base 24a is attached and fixed to the second timing belt 24b, and at the same time, is attached to the auxiliary rails 25 on both sides.

This makes it possible for the second base 24a to reciprocate by the second timing belt 24b and is guided along the auxiliary rails 25.

As a result, in the second conveyors 2, rattles during reciprocation of the second support plates B2 can be prevented, and the second support plates B2 can be smoothly reciprocated.

The linear motion guide 5 is provided at substantially the center of the laser processing apparatus 100 and for guiding the reciprocating movement of the first support plates B1 and the second support plates B2.

Specifically, the linear motion guide 5 consists of blocks 5a attached to the lower rear side of the first support plates B1, that is, the lower rear side of the first front-rear plate part B1b, and the lower front side of the second support plates B2, that is, the lower rear side of the second front-rear plate part B2b respectively, and a rail section 5b to which both blocks 5a are attached and extending in the transport direction.

Therefore, the first support plates B1 are supported by the first linear motion mechanism 14 below the first top-bottom plate part B1a, and supported by the linear motion guide 5 at a rear lower part of the first front-rear plate part B1b.

And during the reciprocating movement by the first linear motion mechanism 14, they are guided by the auxiliary rails 15 of the first linear motion mechanism 14 and the rail section 5b of the linear motion mechanism 5.

Similarly, the second support plates B2 are supported by the second linear motion mechanism 24 below the second top-bottom plate part B2a, and supported by the linear motion guide 5 at a front lower part of the second front-rear plate part B2b.

And during the reciprocating movement by the second linear motion mechanism 24, they are guided by the auxiliary rails 25 of the second linear motion mechanism 24 and the rail section 5b of the linear motion mechanism 5.

Because of these, in the laser processing apparatus 100, the reciprocating movement of the first support plates B1 by the first linear motion mechanism 14 and the reciprocating movement of the second support plates B2 by the second linear motion mechanism 24 can be made smoother.

Here, in the linear motion guide 5, both of the said blocks 5a are made to reciprocate along one rail section 5b. That is, the blocks 5a attached to the first support plates B1 and the second support plates B2 respectively are guided by a single common rail section 5b.

This makes the first support plates B1 and the second support plates B2 reciprocate on the same line, thereby preventing the occurrence of a difference between the height level of the first endless belt 10 and the height level of the second endless belt 20 in the vicinity of the laser processing area R when the first support plates B1 and/or the second support plates B2 reciprocates.

Also, by installing only one rail section 5b, the laser processing apparatus 100 itself can be made compact.

Returning to FIG. 1, in the laser processing apparatus 100, the laser section 100b has an X-axis rail 41 for reciprocating the laser head H in the width direction, and a Y-axis rail 42 for reciprocating the X-axis rail 41 in the transport direction.

The laser head H is arranged above the laser processing area R and is capable of irradiating laser beam downward.

Here, the type of laser beam is not particularly limited, for example, solid-state lasers, liquid lasers, gas lasers, semiconductor lasers, free electron lasers, metal vapor lasers, and chemical lasers can be used.

In the laser processing apparatus 100, the Y-axis rail 42 extends in the transport direction and are arranged on outer frame F on both sides of the endless belts (first endless belt 10 and second endless belt 20).

And the X-axis rail 41 extends in the width direction and is arranged so as to be supported by the Y-axis rails 42 on both sides.

Also, the laser head H is attached to the X-axis rail 41.

Therefore, in the laser processing apparatus 100, by making full use of the reciprocating movement of the laser head H to the X-axis rail 41 and the reciprocating movement of the X-axis rail 41 to the Y-axis rail 42, the laser head H can be moved in any direction to the plate material X to be transported, such as the transport direction, width direction, diagonal direction, and curved direction.

This makes it possible for the laser section 100b to perform laser processing on a plate material X into a complex shape while transporting the relevant plate material X.

Returning to FIG. 2, in the transport section 100a, the first cover part 3a and the second cover part 3b are arranged in the space below the laser processing area R so as to face each other.

The first cover part 3a is for covering the first endless belt 10 guided downward from the first rear guide rolls 11b, and the second cover part 3b is for covering the second endless belt 20 guided from below to the second front guide rolls 21a.

This makes it possible to prevent scattering spatters during laser processing from adhering to the first endless belt 10 and the second endless belt 20.

The first cover part 3a is attached to the rear end of the first front-rear plate part B1b of the first support plates B1 with its both ends, and the second cover part 3b is attached to the front end of the second front-rear plate part B2b of the second support plates B2 with its both ends.

As a result, by the first support plates B1, the first cover part 3a reciprocates in the transport direction together with a pair of first rear guide rolls 11b and a pair of first sagging prevention rolls 12, and by the second support plates B2, the second cover part 3b reciprocates in the transport direction together with a pair of second rear guide rolls 21a and a pair of second sagging prevention rolls 22.

Here, the material of the first cover part 3a and the second cover part 3b is not particularly limited, but is preferably a metal that has excellent heat resistance and high thermal conductivity (for example, pure copper), and more preferably a metal of a different material from the plate material used for laser processing. In this case, it is possible to drop spatters without adhering as much as possible.

Also, the opposing surfaces of the first cover part 3a and the second cover part 3b may be laminated or the like to prevent adhesion of spatters.

The collection box 3c is placed in the space below the laser processing area R between the first cover part 3a and the second cover part 3b. By the way, because the collection box 3c is not attached to the first support plates B1 or the second support plates B2, it does not reciprocate in the transport direction.

In the laser processing apparatus 100, scraps and spatters that have cooled, solidified, and fallen can be efficiently collected by the collection box 3c.

By the way, because the width direction of the collection box 3c has a size to correspond to the width direction of the laser processing area R, and the transport direction has a size to correspond to the occasion where the distance in the transport direction of the laser processing area R is maximized.

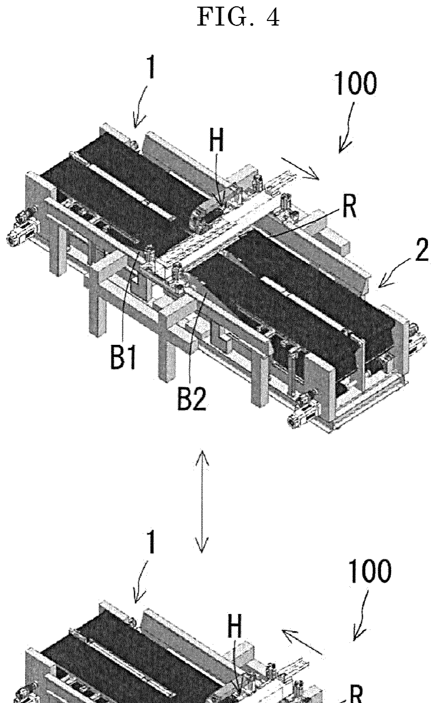

FIG. 4 is a perspective view for describing a state of steady motion of the first support plates and the second support plates of the laser processing apparatus shown in FIG. 1. By the way, in FIG. 4, the description of the plate material and the processed material are omitted.

As shown in FIG. 4, by moving the first support plates B1 and the second support plates B2 in the same direction and at the same speed (steady motion), the laser processing apparatus 100 is capable of moving the laser processing area R in the transport direction without changing the distance of the laser processing area R in the transport direction.

By the way, the laser processing apparatus 100 at the bottom of FIG. 4 is in a state in which the laser processing area R of the laser processing apparatus 100 at the top is moved backward (downstream side).

In this way, in the laser processing apparatus 100, by making the first support plates B1 and the second support plates B2 steadily move and laser processing area R follow the movement of the laser head H in the transport direction, it becomes possible to perform laser processing in the laser processing area R at all times.

This makes it possible to prevent the first conveyors 1 and the second conveyors 2 from being damaged by the laser beam irradiated from the laser head H.

Also, since the range of motion of the laser head H is increased, by increasing the transport speed of the plate material X, it becomes possible to perform laser processing at a relatively high speed.

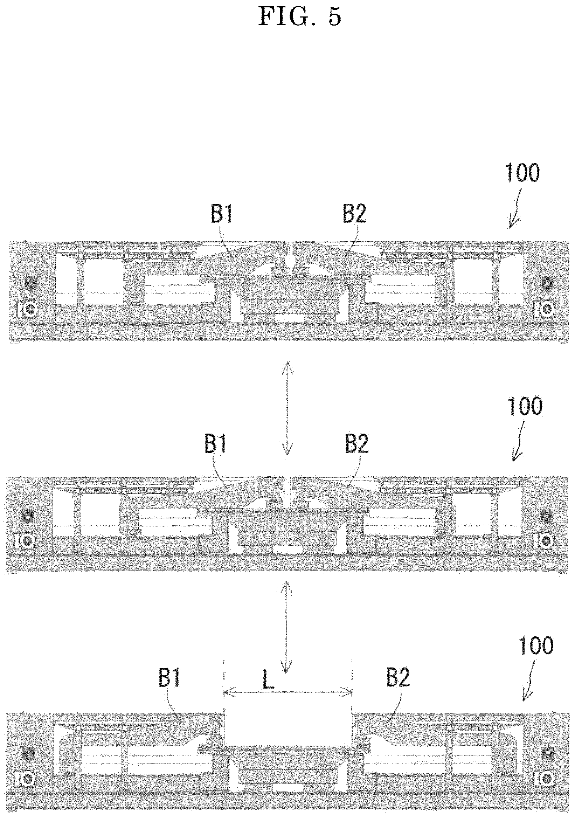

FIG. 5 is a schematic side view for describing a state of unsteady motion of the first support plates and the second support plates of the laser processing apparatus shown in FIG. 1. By the way, in FIG. 5, the description of the plate material, the processed material, and the laser section is omitted.

As shown in FIG. 5, by moving the first support plates B1 and the second support plates B2 in the opposite direction (unsteady motion), the laser processing apparatus 100 is capable of increasing the distance of the laser processing area R in the transport direction.

By the way, the laser processing apparatus 100 shown in the middle of the FIG. 5 is the laser processing apparatus 100 shown at the top of the page, with the first support plates B1 moved forward (upstream side) and the second support plates B2 moved backward (downstream side), and the laser processing apparatus 100 shown at the bottom of the page is the laser processing apparatus 100 shown at the top of the page, with the first support plates B1 moved as far forward (upstream side) as possible and the second support plates B2 moved as far backward (downstream side) as possible.

In this way, in the laser processing apparatus 100, by making unsteady motion of the first support plates B1 and the second support plates B2, the distance L in the transport direction of the laser processing area R can be made variable.

This makes it possible to drop scraps from the laser processing area during laser processing by adjusting the distance in the transport direction of the laser processing area R according to the size of the scraps.

Also, by widening the distance of the laser processing area R in the transport direction, the scattering spatters may solidify and fall before adhering to the first conveyors 1 or the second conveyors 2, thereby preventing adhesion to the first conveyors 1 or the second conveyors 2.

In addition, by sufficiently widening the distance L of the laser processing area R in the transport direction, maintenance is also made easier.

Here, the maximum variable width of the distance L of the laser processing area R in the transport direction is preferably 10 to 1000 mm.

When the distance L in the transport direction of the laser processing area R is less than 10 mm, compared to when the distance L is within the above range, there is a risk that scattering spatters during laser processing may reach the endless belt and damage the relevant endless belt, and when the distance L in the transport direction of the laser processing area R exceeds 1000 mm, compared to when the distance L is within the above range, there is a risk that if the thickness of the plate material is thin (for example, less than 0.1 mm), the plate material may bend in the laser processing area R, and the processing accuracy of the laser processing may be reduced.

### (2nd Embodiment)

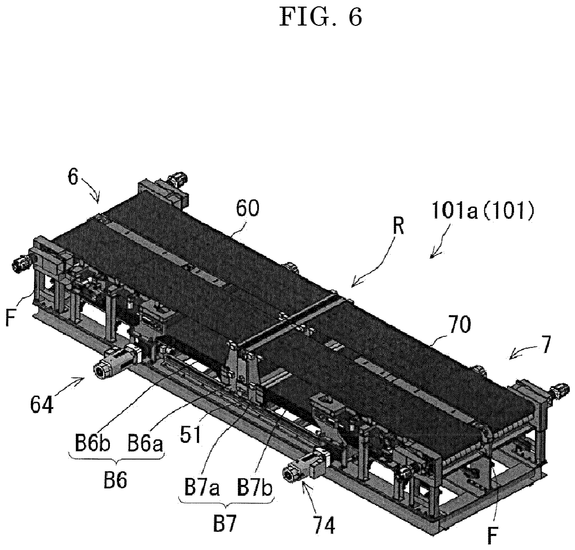

FIG. 6 is a perspective view showing a 2nd Embodiment of the transport section of the laser processing apparatus according to the present invention. By the way, in FIG. 6, the description of the plate material, the processed material and the laser section is omitted.

As shown in FIG. 6, the laser processing apparatus 101 according to the 2nd Embodiment includes a transport section 101a for transporting a plate material or a processed material, and a laser section mounted above the transport section 101a so as to straddle the transport section 101a.

Therefore, in the laser processing apparatus 101 according to the 2nd Embodiment, a plate material is transported by the transport section 101a, the laser section irradiates the laser beam (laser processing), and the processed material is transported by the transport section 101a.

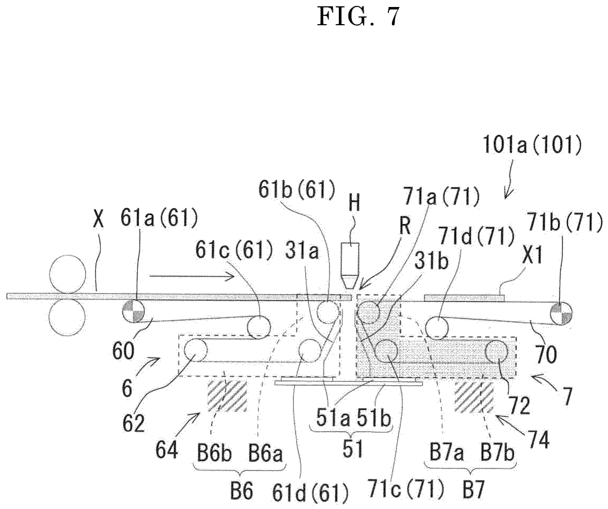

FIG. 7 is a rough side view for describing a transport section of the laser processing apparatus shown in FIG. 6. By the way, in FIG. 7, the description of the laser section other than the laser head is omitted.

As shown in FIG. 7, in the laser processing apparatus 101 according to the 2nd Embodiment, the transport section 101a is provided with first conveyors 6 and second conveyors 7 arranged in series, a laser head H arranged above a laser processing area R which is a space between the first conveyors 6 and the second conveyors 7, a linear motion guide 51 for guiding the first support plates B6 and the second support plates B7, and a first cover part 31a, a second cover part 31b, and a collection box (not shown in the FIG.) arranged below the laser processing area R.

In the transport section 101a, the plate material X is transported on the upper surface of the first conveyors 6, and the processed material X1 which is the laser processed plate material X, is transported on the upper surface of the second conveyors 7.

Also, in the transport section 101a, laser processing is performed in the laser processing area R by the laser head H.

At this time, in the laser processing apparatus 100, as will be described later, it is possible to make the laser processing area R follow the movement of the laser head H in the transport direction during laser processing.

Also, by widening the distance of the laser processing area R in the transport direction in accordance with the size of scraps generated, it is possible to drop scraps into a collection box.

In the transport section 101a, similar to the first conveyors 1 of the laser processing apparatus 100 according to the 1st Embodiment, two first conveyors 6 are arranged side by side in the width direction (see FIG. 6).

Here, since the left and right first conveyors 6 have the same configuration, one of the first conveyors 6 is used to describe its configuration.

The first conveyor 6 has at least a first endless belt 60, first guide rolls 61 for guiding the first endless belt 60, first sagging prevention rolls 62 for preventing sagging in the first endless belt 60, first support plates B6 on which designated rolls are supported, and a first linear motion mechanism 64 for reciprocating the said first support plates B6 in the transport direction.

By the way, in the first conveyors 6, because the first endless belt 60 is the same as the first endless belt 10 of the first conveyors 1 according to the above 1st Embodiment, a description thereof is omitted.

Also, although the first conveyors 6 shown in FIG. 7 do not have a first tension adjustment roll and a first meandering adjustment roll, these may be provided at any position as necessary.

The first guide rolls 61 are rolls for guiding the first endless belt 60.

The first guide rolls 61 have first front guide roll s 61a that are in contact with the inner surface of the first endless belt 60 and arranged on the upstream side, first rear guide rolls 61b that are in contact with the inner surface of the first endless belt 60 and arranged on the downstream side, first rear lower guide rolls 61d that are in contact with the inner surface of the first endless belt 60 and arranged below the first rear guide rolls 61b, and the first middle guide rolls 61c that are in contact with the outer surface of the first endless belt 60 and arranged at substantially the center of the first conveyors 6.

Therefore, with the first conveyors 6, the first endless belt 60 is guided in the order of the first front guide rolls 61a, the first rear guide rolls 61b, the first rear lower guide rolls 61d, and the first middle guide rolls 61c.

In the first guide rolls 61, the first front guide rolls 61a and the first middle guide rolls 61c are in a rotatable state, and their both ends are supported by outer frame F located on both sides of the first endless belt 60 (see FIG. 6).

Also, the first front guide rolls 61a have a drive unit and are provided with a function as drive rolls for driving the first endless belt 60 as well.

On the other hand, both of the first rear guide rolls 61b and the first rear lower guide rolls 61d are in a rotatable state, and their both ends are supported by the first support plates B6.

The first sagging prevention rolls 62 are rolls for preventing sagging in the first endless belt 60 by moving together with the first rear guide rolls 61b.

The first sagging prevention rolls 62 are in contact with the inner surface of the first endless belt 60 between the first rear lower guide rolls 61d and the first middle guide rolls 61c, and are arranged forward of the first middle guide rolls 61c.

Therefore, the first endless belt 60 is guided to the first sagging prevention rolls 62 between the first rear lower guide rolls 61d and the first middle guide rolls 61c.

The first sagging prevention rolls 62 are in a rotatable state, and their both ends are supported by the first support plates B6.

The first support plates B6 are provided on both sides of the first conveyors 6. Here, since these first support plates B6 have a symmetrical structure to each other, one of the first support plate B6 us used to describe its configuration.

The first support plate B6 has a L-shape in side view and consists of a plate-shaped first top-bottom plate part B6a extending in the top-bottom direction and a plate-shaped first front-rear plate part B6b extending forward from below the first top-bottom plate part B6a.

And the first front-rear plate part B6b supports the first sagging prevention rolls 62 on its front side in a rotatable state, the intersection part of the first front-rear plate part B6b and the first top-bottom plate part B6a supports the first rear lower guide rolls 61d in a rotatable state, and the first top-bottom plate part B6a supports the first rear guide rolls 61b on its upper side in a rotatable state.

In the first support plates B6 on both sides, to the lower front side, that is, to the lower part of the first front-rear plate part B6b, the first linear motion mechanism 64 is attached.

The first support plates B6 are capable of reciprocating movement in the transport direction by the relevant first linear motion mechanism 64. That is, in the laser processing apparatus 101, the first linear motion mechanism 64 enables the first rear guide rolls 61b, the first rear lower guide rolls 61d, and the first sagging prevention rolls 62 supported by the first support plates B6 to reciprocate together in the transport direction.

In the first support plates B6, for example, when the first rear guide rolls 61b are moved backward, the tension of the first endless belt 60 increases, however, since the first sagging prevention rolls 62 are also moved backward at the same time, forcefully pulling the first endless belt 60 can be prevented.

Conversely, when the first rear guide rolls 61b are moved forward, the tension of the first endless belt 60 decreases, however, since the first sagging prevention rolls 62 are also moved forward at the same time, sagging of the first endless belt 60 can be prevented.

That is, because of the first sagging prevention rolls 62, even when the first support plates B6 move, a constant length of the first endless belt 60 can be maintained.

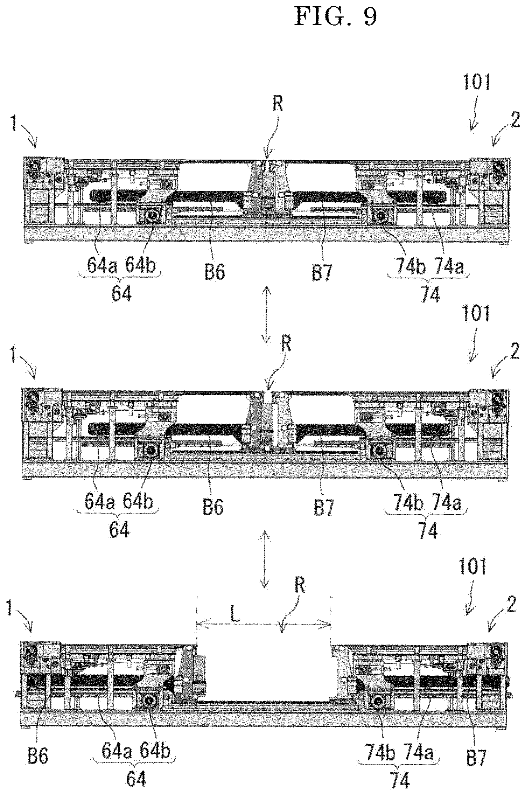

The first linear motion mechanism 64 is placed to reciprocate the first support plates B6 in the transport direction
The first linear motion mechanism 64 consists of a first rack 64a attached to the lower part of the first support plates B6, a first pinion meshed with the said first rack 64a, and a first motor 64b for rotating the said first pinion (see FIG. 9). By the way, the first pinion is connected to the first motor 64b at the back side of FIG. 9.

In the first linear motion mechanism 64, the first motor 64b drives the first pinion, thereby making it possible to reciprocate the first rack 64a in the transport direction. That is, the first linear motion mechanism 64 is capable of reciprocating the first support plates B6 attached to that first rack 64a in the transport direction.

In this way, the first linear motion mechanism 64 is capable of reciprocating the first support plates B6 with sufficient accuracy, while having a simple configuration.

By the way, in the first linear motion mechanism 64, the first rack 64a is connected to the first front-rear plate part B6b of the first support plates B6, and the first motor 64b is fixed to the outer frame F.

In the transport section 101a, similar to the second conveyors 2 of the laser processing apparatus 100 according to the 1st Embodiment, two second conveyors 7 are arranged side by side in the width direction (see FIG. 6).

Here, since the left and right second conveyors 7 have the same configuration, one of the second conveyors 7 is used to describe its configuration.

The second conveyor 7 has at least a second endless belt 70, second guide rolls 71 for guiding the second endless belt 70, second sagging prevention rolls 72 for preventing sagging in the second endless belt 70, second support plates B7 on which designated rolls are supported, and a second linear motion mechanism 74 for reciprocating the said second support plates B7 in the transport direction.

By the way, in the second conveyors 7, because the second endless belt 70 is the same as the second endless belt 20 of the second conveyors 2 according to the above 1st Embodiment, a description thereof is omitted.

Also, although the second conveyors 7 shown in FIG. 7 do not have a second tension adjustment roll and a second meandering adjustment roll, these may be provided at any position as necessary.

The second guide rolls 71 are rolls for guiding the second endless belt 70.

The second guide rolls 71 have second front guide rolls 71a that are in contact with the inner surface of the second endless belt 70 and arranged on the upstream side, second rear guide rolls 71b that are in contact with the inner surface of the second endless belt 70 and arranged on the downstream side, second front lower guide rolls 71c that are in contact with the inner surface of the second endless belt 70 and arranged below the second front guide rolls 71a, and second middle guide rolls 71d that are in contact with the outer surface of the second endless belt 70 and arranged at substantially the center of the second conveyors 7.

Therefore, with the second conveyors 7, the second endless belt 70 is guided in the order of the second front guide rolls 71a, the second rear guide rolls 71b, the second middle guide rolls 71d, and the second front lower guide rolls 71c.

In the second guide rolls71, the second rear guide rolls 71b and the second middle guide rolls 71d are in a rotatable state, and their both ends are supported by outer frame F located on both sides of the second endless belt 70 (see FIG. 6).

Also, the second rear guide rolls 71b have a drive unit and are provided with a function as drive rolls for driving the second endless belt 70 as well.

On the other hand, both of the second front guide rolls 71a and the first front lower guide rolls 71c are in a rotatable state, and their both ends are supported by the second support plates B7.

The second sagging prevention rolls 72 are rolls for preventing sagging in the second endless belt 70 by moving together with the second front guide rolls 71a.

The second sagging prevention rolls 72 are in contact with the inner surface of the second endless belt 70 between the second middle inner guide rolls 71d and the second front lower guide rolls 71c, and are arranged backward of the second middle guide rolls 71d.

Therefore, the second endless belt 70 is guided to the second sagging prevention rolls 72 between the second middle guide rolls 71d and the first front lower guide rolls 71c.

The second sagging prevention rolls 72 are in a rotatable state, and their both ends are supported by the second support plates B7.

The second support plates B7 are provided on both sides of the second conveyors 7. Here, since these second support plates B7 have a symmetrical structure to each other, one of the second support plate B7 is used to describe its configuration.

The second support plate B7 has a L-shape in side view and consists of a plate-shaped second top-bottom plate part B7a extending in the top-bottom direction and a plate-shaped second front-rear plate part B7b extending backward from below the second top-bottom plate part B7a.

And the second front-rear plate part B7b supports the second sagging prevention rolls 72 on its rear side in a rotatable state, the intersection part of the second front-rear plate part B7b and the second top-bottom plate part B7a supports the second rear lower guide roll 71c in a rotatable state, and the second top-bottom plate part B7a supports the second front guide rolls71a on its upper side in a rotatable state.

In the second support plates B7 on both sides, to the lower rear side, that is, to the lower part of the second front-back plate part B7b, the second linear motion mechanism 74 is attached.

The second support plates B7 are capable of reciprocating movement in the transport direction by the relevant second linear motion mechanism 74. That is, in the laser processing apparatus 101, the second linear motion mechanism 74 enables the second front guide rolls 71a, the second front lower guide rolls 71c, and the second sagging prevention rolls 72 supported by the second support plates B7 to reciprocate together in the transport direction.

In the second support plates B7, for example, when the second front guide rolls 71a are moved backward, the tension of the second endless belt 70 decreases, however, since the second sagging prevention rolls 72 are also moved backward at the same time, sagging of the second endless belt 70 can be prevented.

Conversely, when the second front guide rolls 71a are moved forward, the tension of the second endless belt 70 increases, however, since the second sagging prevention rolls 72 are also moved forward at the same time, forcefully pulling the second endless belt 70 can be prevented.

That is, because of the second sagging prevention rolls 72, even when the second support plates B7 move, a constant length of the second endless belt 70 can be maintained.

The second linear motion mechanism 74 is placed to reciprocate the second support plates B7 in the transport direction.

The second linear motion mechanism 74 consists of a second rack 74a attached to the lower part of the second support plates B7, a second pinion meshed with the said second rack 74a, and a second motor 74b for rotating the said second pinion (see FIG. 9). By the way, the second pinion is connected to the second motor 64b at the back side of FIG. 9.

In the second linear motion mechanism 74, the second motor 74b drives the second pinion, thereby making it possible to reciprocate the second rack 74a in the transport direction. That is, the second linear motion mechanism 74 is capable of reciprocating the second support plates B7 attached to that second rack 74a in the transport direction.

In this way, the second linear motion mechanism 74 is capable of reciprocating the second support plates B7 with sufficient accuracy, while having a simple configuration.

By the way, in the second linear motion mechanism 74, the second rack 74a is connected to the second front-rear plate part B7b of the second support plates B7, and the second motor 74b is fixed to the outer frame F.

The linear motion guide 51 is provided at substantially the center of the laser processing apparatus 101 and for guiding the reciprocating movement of the first support plates B6 and the second support plates B7.

Specifically, the linear motion guide 51 consists of blocks 51a attached to the lower rear side of the first support plates B6, and the lower front side of the second support plates B7 respectively, and a rail section 51b to which both blocks 51a are attached and extending in the transport direction.

Therefore, the first support plates B6 are supported by the first linear motion mechanism 64 at the front lower part of the first front-rear plate part B6b, and are supported by the linear motion guide 51 at rear lower part of the first front-rear plate part B6b.

And during the reciprocating movement by the first linear motion mechanism 64, they are guided by the auxiliary rail section 51b of the linear motion guide 51.

Similarly, the second support plates B7 are supported by the second linear motion mechanism 74 at a rear lower part of the second front-back plate part B7b, and are supported by the linear motion guide 51 at a front lower part of the second front-rear plate part B7b.

And during the reciprocating movement by the second linear motion mechanism 74, they are guided by the auxiliary rail section 51b of the linear motion guide 51.

Because of these, in the laser processing apparatus 101, the reciprocating movement of the first support plates B6 by the first linear motion mechanism 64 and the reciprocating movement of the second support plates B7 by the second linear motion mechanism 74 can be made smoother.

Here, in the linear motion guide 51, both of the said blocks 51a are made to reciprocate along one rail section 51b. That is, the blocks 51a attached to the first support plates B6 and the second support plates B7 respectively are guided by a single common rail section 51b.

This makes the first support plates B6 and the second support plates B7 reciprocate on the same line, thereby preventing the occurrence of a difference between the height level of the first endless belt 60 and the height level of the second endless belt 70 in the vicinity of the laser processing area R when the first support plates B6 and/or the second support plates B7 reciprocates.

Also, by installing only one rail section 51b, the laser processing apparatus 100 itself can be made compact.

Because in the laser processing apparatus 101, the laser part has the same configuration as the laser part 100b in the laser processing apparatus 100 according to the 1st Embodiment, a description thereof is omitted.

Also, because the first cover part 31a and the second cover part 31b are the same as the first cover part 3a and the second cover part 3b in the laser processing apparatus 100 according to the 1st Embodiment, a description thereof is omitted.

In addition, although the laser processing apparatus 101 shown in FIG. 7 does not have a collection box, this may be provided at any position as necessary.

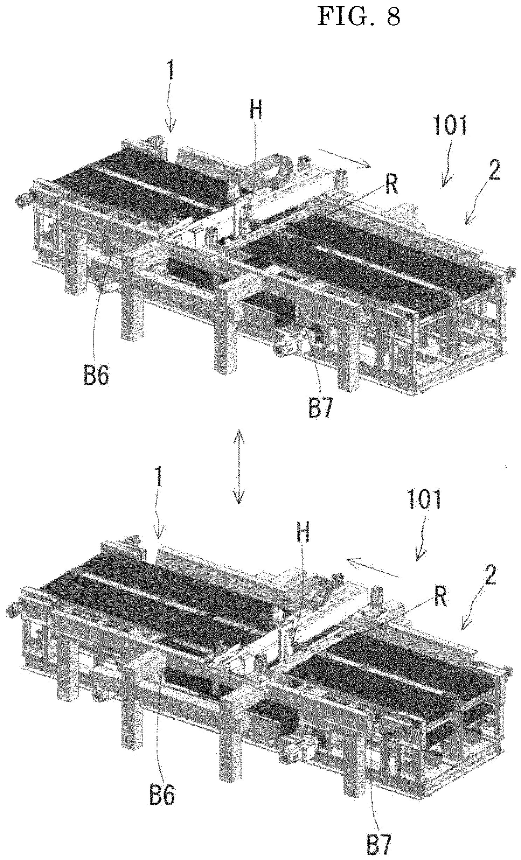

FIG. 8 is a perspective view for describing a state of steady motion of the first support plates and the second support plates of the laser processing apparatus shown in FIG. 6. By the way, in FIG. 8, the description of the plate material and the processed material are omitted.

As shown in FIG. 8, by moving the first support plates B6 and the second support plates B7 in the same direction and at the same speed (steady motion), the laser processing apparatus 101 is capable of moving the laser processing area R in the transport direction without changing the distance of the laser processing area R in the transport direction.

By the way, the laser processing apparatus 101 at the bottom of FIG. 8 is in a state in which the laser processing area R of the laser processing apparatus 101 at the top is moved backward (downstream side).

In this way, in the laser processing apparatus 101, by making the first support plates B6 and the second support plates B7 steadily move and laser processing area R follow the movement of the laser head H in the transport direction, it becomes possible to perform laser processing in the laser processing area R at all times.

This makes it possible to prevent the first conveyors 6 and the second conveyors 7 from being damaged by the laser beam irradiated from the laser head H.

Also, since the range of motion of the laser head H is increased, by increasing the transport speed of the plate material X, it becomes possible to perform laser processing at a relatively high speed.

FIG. 9 is a schematic side view for describing a state of unsteady motion of the first support plates and the second support plates of the laser processing apparatus shown in FIG. 6. By the way, in FIG. 9, the description of the plate material, the processed material, and the laser part is omitted.

As shown in FIG. 9, by moving the first support plates B6 and the second support plates B7 in the opposite direction (unsteady motion), the laser processing apparatus 101 is capable of increasing the distance of the laser processing area R in the transport direction.

By the way, the laser processing apparatus 101 shown in the middle of the FIG. 9 is the laser processing apparatus 101 shown at the top of the page, with the first support plates B6 moved forward (upstream side) and the second support plates B7 moved backward (downstream side), and the laser processing apparatus 101 shown at the bottom of the page is the laser processing apparatus 101 shown at the top of the page, with the first support plates B6 moved as far forward (upstream side) as possible and the second support plates B7 moved as far backward (downstream side) as possible.

In this way, in the laser processing apparatus 101, by making unsteady motion of the first support plates B6 and the second support plates B7, the distance L in the transport direction of the laser processing area R can be made variable.

This makes it possible to drop scraps from the laser processing area during laser processing by adjusting the distance in the transport direction of the laser processing area R according to the size of the scraps.

Also, by widening the distance of the laser processing area R in the transport direction, the scattering spatters may solidify and fall before adhering to the first conveyors 6 or the second conveyors 7, thereby restraining adhesion to the first conveyors 6 or the second conveyors 7.

In addition, by sufficiently widening the distance L of the laser processing area R in the transport direction, maintenance is also made easier. By the way, the maximum variable width of the distance L of the laser processing area R in the transport direction is preferably within the range mentioned above.

### (3rd Embodiment)

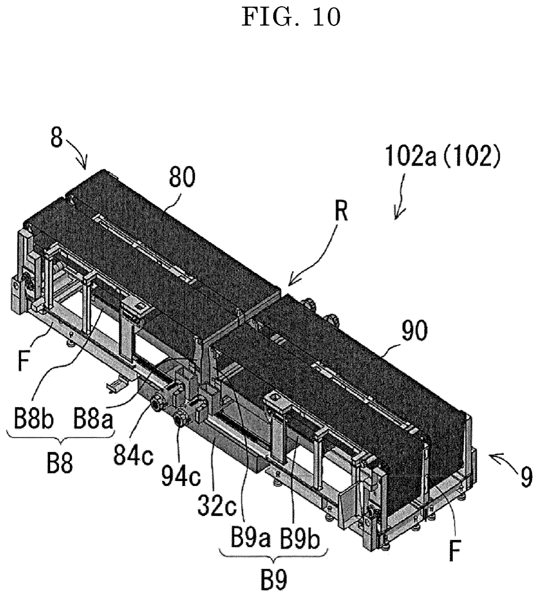

FIG. 10 is a perspective view showing a 3rd Embodiment of the transport section of the laser processing apparatus according to the present invention. By the way, in FIG. 10, the description of the plate material, the processed material, and the laser part is omitted.

As shown in FIG. 10, the laser processing apparatus 102 according to the 3rd Embodiment includes a transport section 102a for transporting a plate material or a processed material, and a laser section mounted above the transport section 102a so as to straddle the transport section 102a.

Therefore, in the laser processing apparatus 102 according to the 3rd Embodiment, a plate material is transported by the transport section 102a, the laser section irradiates the laser beam (laser processing), and the processed material is transported by the transport section 102a.

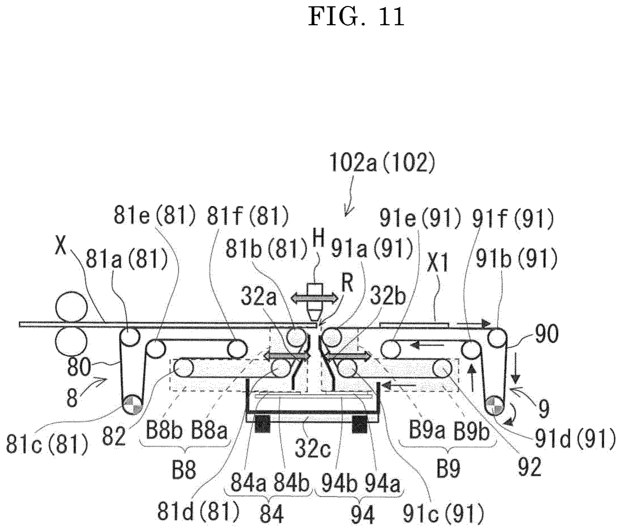

FIG. 11 is a rough side view for describing a transport section of the laser processing apparatus shown in FIG. 10. By the way, in FIG. 11, the description of the laser unit other than the laser head is omitted.

As shown in FIG. 11, in the laser processing apparatus 102 according to the 3rd Embodiment, the transport section 102a is provided with first conveyors 8 and second conveyors 9 arranged in series, a laser head H arranged above a laser processing area R which is a space between the first conveyors 8 and the second conveyors 9, a first cover part 32a, a second cover part 32b, and a collection box 32c arranged below the laser processing area R.

In the transport section 102a, the plate material X is transported on the upper surface of the first conveyors 8, and the processed material X1 which is the laser processed plate material X, is transported on the upper surface of the second conveyors 9.

Also, in the transport section 102a, laser processing is performed in the laser processing area R by the laser head H.

At this time, in the laser processing apparatus 100, as will be described later, it is possible to make the laser processing area R follow the movement of the laser head H in the transport direction during laser processing.

Also, by widening the distance of the laser processing area R in the transport direction in accordance with the size of scraps generated, it is possible to drop scraps into a collection box.

In the transport section 102a, similar to the first conveyors 1 of the laser processing apparatus 100 according to the 1st Embodiment, two first conveyors 8 are arranged side by side in the width direction (see FIG. 10).

Here, since the left and right first conveyors 8 have the same configuration, one of the first conveyors 8 is used to describe its configuration.

The first conveyor 8 has at least a first endless belt 80, first guide rolls 81 for guiding the first endless belt 80, first sagging prevention rolls 82 for preventing sagging in the first endless belt 80, first support plates B8 on which designated rolls are supported, and a first linear motion mechanism 84 for reciprocating the said first support plates B8 in the transport direction.

By the way, because in the first conveyors 8, the first endless belt 80 is the same as the first endless belt 10 of the first conveyors 1 according to the 1st Embodiment mentioned above, a description thereof is omitted.

Also, although the first conveyors 8 shown in FIG. 11 do not have a first tension adjustment roll and a first meandering adjustment roll, these may be provided at any position as necessary.

The first guide rolls 81 are rolls for guiding the first endless belt 80.

The first guide rolls 81 have first front guide rolls 81a that are in contact with the inner surface of the first endless belt 80 and arranged on the upstream side, first rear guide rolls 81b that are in contact with the inner surface of the first endless belt 80 and arranged on the downstream side, first rear lower guide roll 81c that are in contact with the inner surface of the first endless belt 80 and arranged below the first front guide rolls 81a, first rear lower guide rolls 81d that are in contact with the inner surface of the first endless belt 80 and arranged below the first rear guide rolls 81b, first middle front guide roll 81e that are in contact with the outer surface of the first endless belt 80 and arranged front side of the substantial center of the first conveyors 8, and first middle rear guide rolls 81f that are arranged at the rear side of the substantial center of the first conveyors 8.

Therefore, with the first conveyors 8, the first endless belt 80 is guided in the order of the first front guide rolls 81a, the first rear guide rolls 81b, the first rear lower guide rolls 81d, the first middle rear guide rolls 81f, the first middle front guide rolls 81e, and the first front lower guide rolls 81c.

In the first guide rolls 81, the first front guide rolls 81a, the first middle rear guide rolls 81f, the first middle front guide rolls 81e, and the first front lower guide rolls 81c are in a rotatable state, and their both ends are supported by outer frame F located on both sides of the first endless belt 80 (see FIG. 10).

Also, the first front guide rolls 81c have a drive unit and are provided with a function as drive rolls for driving the first endless belt 80 as well.

On the other hand, both of the first rear guide rolls 81b and the first rear lower guide rolls 81d are in a rotatable state, and their both ends are supported by the first support plates B8.

The first sagging prevention rolls 82 are rolls for preventing sagging in the first endless belt 80 by moving together with the first rear guide rolls 81b.

The first sagging prevention rolls 82 are in contact with the inner surface of the first endless belt 80 between the first rear lower guide rolls 81d and the first middle rear guide rolls 81f, and is arranged forward of the first middle rear guide rolls 81f.

Therefore, the first endless belt 80 is guided to the first sagging prevention rolls 82 between the first rear lower guide rolls 81d and the first middle rear guide rolls 81f.

The first sagging preventions rolls 82 are in a rotatable state, and their both ends are supported by the first support plates B8.

The first support plates B8 are provided on both sides of the first conveyors 8. Here, since these first support plates B8 have a symmetrical structure to each other, one of the first support plate B8 is used to describe its configuration.

The first support plate B8 has a L-shape in side view and consists of a plate-shaped first top-bottom plate part B8a extending in the top-bottom direction and a plate-shaped first front-rear plate part B8b extending forward from below the first top-bottom plate part B8a.

And the first front-rear plate part B8b supports the first sagging prevention roll 82 on its front side in a rotatable state, the intersection part of the first front-rear plate part B8b and the first top-bottom plate part B8a supports the first rear lower guide roll 81d in a rotatable state, and the first front-rear plate part B8a supports the first rear guide roll 81b on its upper side in a rotatable state.

In the first support plates B8 on both sides, at a lower part of the intersection part of the first top-bottom plate part B8a and the first front-rear plate part B8b, the first linear motion mechanism 84 is attached.

The first support plates B8 are capable of reciprocating movement in the transport direction by the relevant first linear motion mechanism 84. That is, in the laser processing apparatus 102, the first linear motion mechanism 84 enables the first rear guide rolls 81b, the first rear lower guide rolls 81d, and the first sagging prevention rolls 82 supported by the first support plates B8 to reciprocate together in the transport direction.

In the first support plates B8, for example, when the first rear guide rolls 81b are moved backward, the tension of the first endless belt 80 increases, however, since the first sagging prevention rolls 82 are also moved backward at the same time, forcefully pulling the first endless belt 80 can be prevented.

Conversely, when the first rear guide rolls 81b are moved forward, the tension of the first endless belt 80 decreases, however, since the first sagging prevention rolls 82 are also moved forward at the same time, sagging of the first endless belt 80 can be prevented.

That is, because of the first sagging prevention rolls 82, even when the first support plates B8 move, a constant length of the first endless belt 80 can be maintained.

The first linear motion mechanism 84 is placed to reciprocate the first support plates B8 in the transport direction.

The first linear motion mechanism 84 consists of a first central block 84a attached to the lower part of the first support plates B8, a first central rail section 84b extending in the transport direction for guiding the said first central block 84a, and a first servo motor 84c for driving the first central block 84a (see FIG. 10).

In the first linear motion mechanism 84, the first servo motor 84c drives the first central block 84a, thereby, making it possible to reciprocate the first block 84a in the transport direction. That is, the first linear motion mechanism 84 is capable of reciprocating the first support plates B8 attached to that first central block 84a in the transport direction.

In this way, the first linear motion mechanism 84 is capable of reciprocating the first support plates B8 with sufficient accuracy, while having a simple configuration.

By the way, in the first linear motion mechanism 84, the first central block 84a and the first servo motor 84c are connected to the first front-rear plate part B8b of the first support plates B8, and the first central rail section 84b is fixed to the outer frame F.

In the transport section 101a, similar to the second conveyors 2 of the laser processing apparatus 100 according to the 1st Embodiment, two second conveyors 9 are arranged side by side in the width direction (see FIG. 10).

Here, since the left and right second conveyors 9 have the same configuration, one of the second conveyors 9 is used to describe its configuration.

The second conveyors 9 have at least a second endless belt 90, second guide rolls 91 for guiding the second endless belt 90, second sagging prevention rolls 92 for preventing sagging in the second endless belt 90, second support plates B9 on which designated rolls are supported, and a second linear motion mechanism 94 for reciprocating the said second support plates B9 in the transport direction.

By the way, because in the second conveyors 9, the second endless belt 90 is the same as the second endless belt 20 of the second conveyors 2 according to the 1st Embodiment mentioned above, a description thereof is omitted.

Also, although the second conveyors 9 shown in FIG. 11 do not have a second tension adjustment roll and a second meandering adjustment roll, these may be provided at any position as necessary.

The second guide rolls 91 are rolls for guiding the second endless belt 90.

The second guide rolls 91 have second front guide rolls 91a that are in contact with the inner surface of the second endless belt 90 and arranged on the upstream side, second rear guide rolls 91b that are in contact with the inner surface of the second endless belt 90 and arranged on the downstream side, second front lower guide rolls 91c that are in contact with the inner surface of the second endless belt 90 and arranged below the second front guide rolls 91a, second rear lower guide rolls 91d that are in contact with the inner surface of the second endless belt 90 and are arranged below the second rear guide rolls 91b, second middle front guide rolls 91e that are in contact with the outer surface of the second endless belt 90 and arranged at the front side of the substantial center of the second conveyors 9 and second middle rear guide rolls 91f arranged at the rear side of the substantial center of the second conveyors 9.

Therefore, with the second conveyors 9, the second endless belt 90 is guided in the order of the second front guide rolls 91a, the second rear guide rolls 91b, the second rear lower guide rolls 91d, the second middle rear guide rolls 91f, the second middle front guide rolls 91e, and the second front lower guide rolls 91c.

In the second guide rolls 91, the second rear guide rolls 91b, the second middle front guide rolls 91e, the second middle rear guide rolls 91f, and the second rear lower guide rolls 91d are in a rotatable state, and their both ends are supported by outer frame F located on both sides of the second endless belt 90 (see FIG. 10).

Also, the second rear lower guide rolls 91d have a drive unit and are provided with a function as drive rolls for driving the second endless belt 90 as well.

On the other hand, both of the second front guide rolls 91a and the second front lower guide rolls 91c are in a rotatable state, and their both ends are supported by the second support plates B9.

The second sagging prevention rolls 92 are rolls for preventing sagging in the second endless belt 90 by moving together with the second front guide rolls 91a.

The second sagging prevention rolls 92 are in contact with the inner surface of the second endless belt 90 between the second front lower guide rolls 91c and the second middle front guide rolls 91e, and are arranged backward of the second middle front guide rolls 91e.

Therefore, the second endless belt 90 is guided to the second sagging prevention rolls 92 between the second middle front guide rolls 91e and the second front lower guide rolls 91c.

The second sagging prevention rolls 92 are in a rotatable state, and their both ends are supported by the second support plates B9.

The second support plates B9 are provided on both sides of the second conveyors 9. Here, since these second support plates B9 have a symmetrical structure to each other, one of the second support plate B9 is used to describe its configuration.

The second support plate B9 has a L-shape in side view and consists of a plate-shaped second top-bottom plate part B9a extending in the top-bottom direction and a plate-shaped second front-rear plate part B9b extending backward from below the second top-bottom plate part B9a.

And the second front-rear plate part B9b supports the second sagging prevention rolls 92 on its rear side in a rotatable state, the intersection part of the second front-rear plate part B9b and the second top-bottom plate part B9a supports the second front lower guide roll 91c in a rotatable state, and the second top-bottom plate part B9a supports the second front guide rolls 91a on its upper side in a rotatable state.

In the second support plates B9 on both sides, at a lower part of the intersection part of the second top-bottom plate part B9a and the second front-rear plate part B9b, the second linear motion mechanism 94 is attached.

The second support plates B9 are capable of reciprocating movement in the transport direction by the relevant second linear motion mechanism 94. That is, in the laser processing apparatus 102, the second linear motion mechanism 94 enables the second front guide rolls 91a, the second front lower guide rolls 91c, and the second sagging prevention rolls 92 supported by the second support plates B9 to reciprocate together in the transport direction.

In the second support plates B9, for example, when the second front guide rolls 91a are moved backward, the tension of the second endless belt 90 decreases, however, since the second sagging prevention rolls 92 are also moved backward at the same time, sagging of the second endless belt 90 can be prevented.

Conversely, when the second front guide roll 91a are moved forward, the tension of the second endless belt 90 increases, however, since the second sagging prevention rolls 92 are also moved forward at the same time, forcefully pulling the second endless belt 90 can be prevented.

That is, because of the second sagging prevention rolls 92, even when the second support plate B9 move, a constant length of the second endless belt 90 can be maintained.

The second linear motion mechanism 94 is placed to reciprocate the second support plates B9 in the transport direction.

The second linear motion mechanism 94 consists of a second central block 94a attached to the lower part of the second support plates B9, a second central rail section 94b extending in the transport direction to guide the said second central block 94a, and a second servo motor 94c for driving the second central block 94a (see FIG. 10).

In the second linear motion mechanism 94, the second servo motor 94c drives the second central block 94a, thereby, making it possible to reciprocate the second central block 94a in the transport direction. That is, the second linear motion mechanism 94 is capable of reciprocating the second support plates B9 attached to that second central block 94a in the transport direction.

In this way, the second linear motion mechanism 94 is capable of reciprocating the second support plates B9 with sufficient accuracy, while having a simple configuration.

By the way, in the second linear motion mechanism 94, the second central block 94a and the second servo motor 94c are connected to the second front-rear plate part B9b of the second support plates B9, and the second middle rail section 94b is fixed to the outer frame F.

Here, in the laser processing apparatus 102, the first central rail section 84b and the second central rail section 94b are integrated together and form a common rail. That is, the first central block 84a and the second central block 94a are made to reciprocate along one rail.

This makes the first support plates B8 and the second support plates B9 reciprocate on the same line, thereby preventing the occurrence of a difference between the height level of the first endless belt 80 and the height level of the second endless belt 90 in the vicinity of the laser processing area R when the first support plates B8 and/or the second support plates B9 reciprocates.

Also, by installing only one rail, the laser processing apparatus 100 itself can be made compact.

Because in the laser processing apparatus 102, the laser part has the same configuration as the laser part 100b in the laser processing apparatus 100 according to the 1st Embodiment, a description thereof is omitted.

Also, because the first cover part 32a and the second cover part 32b are the same as the first cover part 3a and the second cover part 3b in the laser processing apparatus 100 according to the 1st Embodiment, a description thereof is omitted.

In addition, because the collection box 32c is the same as the collection box 3c in the laser processing apparatus 100 according to the 1st Embodiment, a description thereof is omitted.

By making steady motion of the first support plates B8 and the second support plates B9, the laser processing apparatus 102 is capable of moving the laser processing area R in the transport direction without changing the distance of the laser processing area R in the transport direction.

And by making the laser processing area R follow the movement of the laser head H in the transport direction, it becomes possible to perform laser processing in the laser processing area R at all times.

This makes it possible to prevent the first conveyors 8 and the second conveyors 9 from being damaged by the laser beam irradiated from the laser head H.

Also, since the range of motion of the laser head H is increased, by increasing the transport speed of the plate material X, it becomes possible to perform laser processing at a relatively high speed.

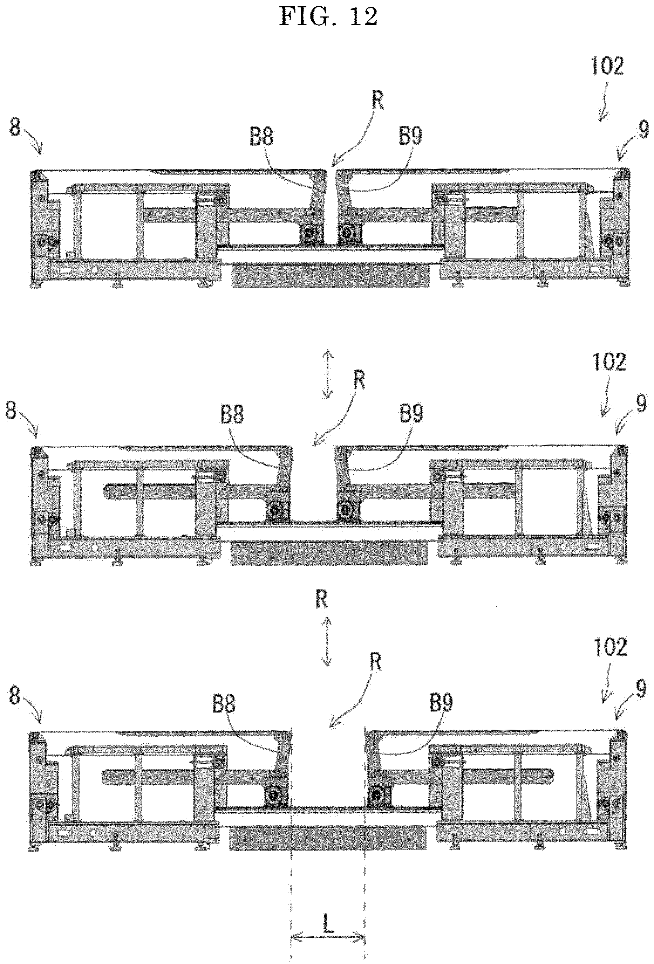

FIG. 12 is a schematic side view for describing a state of unsteady motion of the first support plates and the second support plates of the laser processing apparatus shown in FIG. 10. By the way, in FIG. 12, the description of the plate material, the processed material, and laser part is omitted.

As shown in FIG. 12, by moving the first support plates B8 and the second support plates B9 in the opposite direction (unsteady motion), the laser processing apparatus 102 is capable of changing the distance of the laser processing area R in the transport direction.

By the way, in laser processing apparatus 102 shown in the middle of the FIG. 12 is the laser processing apparatus 102 shown at the top of the page, with the first support plates B8 moved forward (upstream side) and the second support plates B9 moved backward (downstream side), and the laser processing apparatus 102 shown at the bottom of the page is the laser processing apparatus 102 shown at the top of the page, with the first support plates B8 moved as far forward (upstream side) as possible and the second support plates B9 moved as far backward (downstream side) as possible.

In this way, in the laser processing apparatus 102, by making unsteady motion of the first support plates B8 and the second support plates B9, the distance L in the transport direction of the laser processing area R can be made variable.

This makes it possible to drop scraps from the laser processing area during laser processing by adjusting the distance in the transport direction of the laser processing area R according to the size of the scraps.

Also, by widening the distance of the laser processing area R in the transport direction, the scattering spatters may solidify and fall before adhering to the first conveyors 8 or the second conveyors 9, thereby restraining adhesion to the first conveyors 8 or the second conveyors 9.

In addition, by sufficiently widening the distance L of the laser processing area R in the transport direction, maintenance is also made easier. By the way, the maximum variable width of the distance L of the laser processing area R in the transport direction is preferably within the range mentioned above.

As above, the preferred embodiments of the present invention are described, however, the present invention is not limited to the embodiments mentioned above.

In the laser processing apparatuses 100, 101, and 102 according to the present embodiments, two first endless belts are arranged side by side, however, only one belt may be arranged, or three or more belts may be arranged side by side. The same applies to the second endless belt.

In the laser processing apparatus 100 according to the 1st Embodiment, the first conveyors 1 have a first endless belt 10, first guide rolls 11, first sagging prevention rolls 12, a first drive roll 13, a first tension adjustment roll 16, a first meandering adjustment roll 17, first support plates B1, and a first linear motion mechanism 14, and may further have rolls for guiding the first endless belt 10.

Also, the positions of the first drive rolls 13, the first tension adjustment roll 16, and the first meandering adjustment roll 17 are not particularly limited.

In addition, the same applies to the second conveyors 2.

Further, the same applies to the conveyors in the laser processing apparatus 101 according to the 2nd Embodiment and the laser processing apparatus 102 according to the 3rd Embodiment.

In the laser processing apparatus 100 according to the 1st Embodiment, a timing belt is adopted as a linear motion mechanism, in the laser processing apparatus 101 according to the 2nd Embodiment, a rack and pinion are adopted as a linear motion mechanism, and in the laser processing apparatus 102 according to the 3rd Embodiment, a servo motor is adopted as a linear motion mechanism, but not limited to these.

For example, items such as a ball screw and a linear motor can also be adopted.

Also, to a servo motor, a reducer or a transmission may be attached.

In the laser processing apparatus 100 according to the 1st Embodiment, the first support plates B1 consist of first top-bottom plate part B1a and first front-rear plate part B1b, but the configuration of a support plates is not limited to this.

In addition, the same applies to the second support plates B2.

Also, the same applies to the support plates in the laser processing apparatus 101 according to the 2nd Embodiment and the laser processing apparatus 102 according to the 3rd Embodiment.

In the laser processing apparatuses 100, 101, and 102 according to the present embodiments, in order to prevent fumes (gaseous spatter) generated during laser processing from being exposed from both sides below the laser processing area R, it is preferable to provide brush rolls, curtains, guide plates, and so on both sides of the relevant space.

Also, it is preferable that to a cover body, a dust collector for collecting fumes is attached.

### [Industrial Applicability]

The laser processing apparatus according to the present invention can be used as an apparatus that processes a long plate material with a laser beam irradiated from a laser head while transporting the said plate material to produce a processed material, and at the same time, transports the relevant processed material.

With the laser processing apparatus of the present invention, laser processing can be performed on a plate material at a relatively high speed, and also, the distance in the transport direction of the laser processing area can be adjusted according to the size of the scraps to be dropped.

### [Reference Signs List]

1, 6, 8 ... First conveyor
10, 60, 80 ... First endless belt
100, 101, 102 ... Laser processing apparatus
100a, 101a, 102a ... Transport section
100b ... Laser part
11, 61, 81 ... First guide roll
11a, 61a, 81a ... First front guide roll
11b, 61b, 81b ... First rear guide roll
11c, 81c ... First front lower guide roll
11d, 61d, 81d ... First rear lower guide roll
12, 62, 82 ... First sagging prevention roll
13 ... First drive roll
14, 64, 84 ... First linear motion mechanism
14a ... First base
14b ... First timing belt
14c ... First motor
15, 25 ... Auxiliary rail
16 ... First tension adjustment roll
17 ... First meandering adjustment roll
2, 7, 9 ... Second conveyor
20, 70, 90 ... Second endless belt
21, 71, 91 ... Second guide roll
21a, 71a, 91a ... Second front guide roll
21b, 71b, 91b ... Second rear guide roll
21c, 71c, 91c ... Second front lower guide roll
21d, 91d ... Second rear lower guide roll
22, 72, 92 ... Second sagging prevention roll
23 ... Second drive roll
24, 74, 94 ... Second linear motion mechanism
24a ... Second base
24b ... Second timing belt
24c ... Second motor
26 ... Second tension adjustment roll
27 ... Second meandering adjustment roll
3a, 31a, 32a ... First cover part
3b, 31b, 32b ... Second cover part
3c, 32c ... Collection box
41 ... X-axis rail
42 ... Y-axis rail
5, 51 ... Linear motion guide
5a, 51a ... Block
5b, 51b ... Rail section
61c ... First middle guide roll
64a ... First rack
64b ... First motor
71d ... Second middle guide roll
74a ... Second rack
74c ... Second motor
81e ... First middle front guide roll
81f ... First middle rear guide roll
84a ... First central block
84b ... First central rail section
84c ... First servo motor
91e ... Second middle front guide roll
91f ... Second middle rear guide roll
94a ... Second central block
94b ... Second central rail section
94c ... Second servo motor
B1, B6, B8 ... First support plate
B1a, B6a, B8a ... First top-bottom plate part
B1b, B6b, B8b ... First front-rear plate part
B2, B7, B9 ... Second support plate
B2a, B7a, B9a ... Second top-bottom plate part
B2b, B7b, B9b ... Second front-rear plate part
F ... Outer frame
H ... Laser head
R ... Laser processing area
X ... Plate material
X1 ... Processed material

## Claims

1. A laser processing apparatus capable(100,101,102) of transporting a plate material(X) in a designated transport direction, and at the same time, processing the said plate material(X) into a processed material(X1) with a laser beam irradiated from a laser head(H) and transporting the said processed material(X1) in the above-mentioned transport direction;
which is provided with:
first conveyors(1,6,8) and second conveyors(2,7,9) arranged in direct series;
a laser head(H) that is arranged above a laser processing area(R), which is a space between the above-mentioned first conveyors(1,6,8) and the above-mentioned second conveyors(2,7,9) for performing laser processing on the above-mentioned plate material(X);
and the above-mentioned first conveyors(1,6,8) includes at least:
a first endless belt(10,60,80) for transporting the above-mentioned plate material(X);
first guide rolls(11,61,81) whose first front guide rolls(11a,61,81a) located on the upstream side and first rear guide rolls(11b,61b,81b) located on the downstream side that are in contact with an inner surface of the said first endless belt(10,60,80) for guiding the said first endless belt(10,60,80);
first sagging prevention rolls(12,62,82) for preventing sagging in the above-mentioned first endless belt(10,60,80);
first support plates(B1,B6,B8) on which the above-mentioned first rear guide rolls(11b,61b,81b) and the above-mentioned first sagging prevention rolls(12,62,82) are supported;
and a first linear motion mechanism(14,64,84) for reciprocating the said first support plates(B1,B6,B8) in the above-mentioned transport direction;
and the above-mentioned second conveyors(2,7,9) includes at least:
a second endless belt(20,70,90) for transporting the above-mentioned processed material(X1);
second guide rolls(21,71,91) whose second front guide rolls(21a,71a,91a) located on the upstream side and second rear guide rolls(21b,71b,91b) located on the downstream side that are in contact with an inner surface of the said second endless belt(20,70,90) for guiding the said second endless belt(20,70,90);
second sagging prevention rolls(22,72,92) for preventing sagging in the above-mentioned second endless belt(20,70,90);
second support plates(B2,B7,B9) on which the above-mentioned second front guide rolls(21a,71a,91a) and the above-mentioned second sagging prevention rolls(22,72,92) are supported;
and a second linear motion mechanism(24,74,94) for reciprocating the said second support plates(B2,B7,B9) in the above-mentioned transport direction;
and the above-mentioned first front guide rolls(11a.61a,81a) and the above-mentioned second rear guide rolls(21b,71b,91b) are fixed to an outer frame(F);
and the above-mentioned first linear motion mechanism(14,64,84) and the above-mentioned second linear motion mechanism(24,74,94) are respectively capable of being driven independently;
and by moving the above-mentioned first support plates(B1,B6,B8) and the above-mentioned second support plates(B2,B7,B9) in the same direction at the same speed, the distance in the above-mentioned transport direction of the above-mentioned laser processing area(R) becomes constant and follows the movement of the above-mentioned laser head(H) in the above-mentioned transport direction;
and by not moving the above-mentioned first support plates(B1,B6,B8) and the above-mentioned second support plates(B2,B7,B9) in the same direction at the same speed, the distance in the above-mentioned transport direction of the above-mentioned laser processing area(R) becomes variable.

2. The laser processing apparatus(100,101,102) according to claim 1 whose above-mentioned first linear motion mechanism(14,64,84) consists of a first base(14a) to which the above-mentioned first support plates(B1,B6,B8) are attached, a first timing belt(14b) to which the said first base(14a) is attached, and a first motor(14c) for reciprocating the said first timing belt(14b) in the above-mentioned transport direction,
and whose above-mentioned second linear motion mechanism(24,74,94) consists of a second base(24a) to which the above-mentioned second support plates(B2,B7,B9) are attached, a second timing belt(24b) to which the said second base(24a) is attached, and a second motor(24c) for reciprocating the said second timing belt(24b) in the above-mentioned transport direction.

3. A laser processing apparatus(100,101,102) according to claim 2 which is further provided with a linear motion guide(5,51) for guiding the above-mentioned first support plates(B1,B6,B8) and above-mentioned second support plates(B2,B7,B9),
whose above-mentioned first base(14a) is attached to the lower front side of the above-mentioned first support plates(B1,B6,B8),
whose above-mentioned second base(24a) is attached to the lower rear side of the above-mentioned second support plates(B2,B7,B9), and
whose above-mentioned linear motion guide(5,51) consists of blocks(5a,51a) attached to the lower rear side of the above-mentioned first support plates(B1,B6,B8) and the lower front side of the above-mentioned second support plates(B2,B7,B9) respectively, and a rail section(5b,51b) for guiding both of the said blocks(5a,51a).

4. A laser processing apparatus(100,101,102) according to claim 1 which is further provided with
a first cover part(3a,31a,32a) that covers a first endless belt(10,60,80) guided downward from the above-mentioned first rear guide rolls(11b,61b,81b), and
a second cover part(3b,31b,32b) that covers the second endless belt(20,70,90) guided from below to the above-mentioned second front guide rolls(21a,71a,91a).

5. A laser processing apparatus(100,101,102) according to claim 1 which is further provided with
an X-axis(41) rail for reciprocating the above-mentioned laser head(H) in the width direction,
a Y-axis(42) rail for reciprocating the above-mentioned X-axis(41) rail in the above-mentioned transport direction, and
a collection box(3c,32c) arranged below the above-mentioned laser processing area(R).

6. A laser processing apparatus(100,101,102) according to claim 1
whose above-mentioned first conveyors(1,6,8) further include
a first tension adjustment roll(16) for adjusting the tension of the above-mentioned first endless belt(10,60,80) and
a first meandering adjustment roll(17) for preventing meandering of the above-mentioned first endless belt(10,60,80), and
whose above-mentioned second conveyors(2,7,9) further include
a second tension adjustment roll(26) for adjusting the tension of the above-mentioned second endless belt(20,70,90) and
a second meandering adjustment roll(27) for preventing meandering of the above-mentioned second endless belt(20,70,90).

7. A laser processing apparatus(100,101,102) according to any one of claims 1 to 5, whose above-mentioned first guide rolls(11,61,81) are in contact with the inner surface of the above-mentioned first endless belt(10,60,80), and are further provided with the first front lower guide rolls(11c,81c) arranged below the above-mentioned first front guide rolls(11a,61a,81a) and first rear lower guide rolls(11d,61d,81d) arranged below the above-mentioned first rear guide rolls(11b,61b,81b),
whose above-mentioned first front lower guide rolls(11c,81c) and above-mentioned first rear lower guide rolls(11d,61d,81d) are fixed to an outer frame(F), and
whose above-mentioned first sagging prevention rolls(12,62,82) are in contact with the outer surface of the above-mentioned first endless belt(10,60,80) between the above-mentioned first rear guide rolls(11b,61b,81b) and the above-mentioned first rear lower guide rolls(11d,61d,81d), and
whose above-mentioned second guide rolls(21,71,91) are in contact with the inner surface of the above-mentioned second endless belt(20,70,90) and are further provided with the second front lower guide rolls(21c,71c,91c) arranged below the above-mentioned second front guide rolls(21a,71a,91a) and the above-mentioned second rear lower guide rolls(21d,91d) arranged below the above-mentioned second rear guide rolls(21d,71d,91d), and
whose above-mentioned second front lower guide rolls(21c,71c,91c) and the above-mentioned second rear lower guide rolls(21d,91d) are fixed to the outer frame(F), and
whose above-mentioned second sagging prevention rolls(22,72,92) are in contact with the outer surface of the above-mentioned second endless belt(20,70,90) between the above-mentioned second front guide rolls(21a,71a,91a) and the above-mentioned second front lower guide rolls(21c,71c,91c).

8. The laser processing apparatus(100,101,102) according to claim 7, that has the above-mentioned first rear guide rolls(11b,61b,81b), the above-mentioned second front guide rolls(21a,71a,91a), the above-mentioned first sagging prevention rolls(12,62,82), and the above-mentioned second sagging prevention rolls(22,72,92), all arranged in pairs in the top-bottom direction.
